# EUROPEAN PATENT APPLICATION

(11) **EP 4 685 185 A1**
(43) Date of publication of application: **28.01.2026**
(21) Application number: 24774697.7
(22) Date of filing: 07.03.2024
(51) Int. Cl.: C08L 63/00, C08G 59/24, C08K 5/3415

(54) **CURABLE RESIN COMPOSITION, CURED PRODUCT, LAMINATE, AND CURABLE COMPOUND**

(30) Priority: 23.03.2023 JP 2023046584
(71) Applicant: DIC Corporation, Tokyo 174-8520 (JP)
(72) Inventor: SUZUKI Etsuko, Sakura-shi, Chiba 285-8668 (JP); ASANO Yuu, Sakura-shi, Chiba 285-8668 (JP); OTSU Masato, Sakura-shi, Chiba 285-8668 (JP); ARITA Kazuo, Sakura-shi, Chiba 285-8668 (JP)
(74) Representative: TBK
(86) International application number: PCT/JP2024/008652
(87) International publication number: WO 2024/195558

(57) **Abstract**

Provided are a compound that is a curable resin but can easily achieve ease of disassembly, repairability, and remoldability in a cured article, as well as a curable resin composition including the same and a cured article thereof. Specifically, a curable resin composition is used that contains a curable compound (A) having one or more anthracene structures and two or more curable functional groups (a) in a molecule, a compound (B) including a dienophilic structure, and a compound (C) having reactivity with the curable functional groups (a). The curable functional groups are each preferably a hydroxyl group or a glycidyl ether group, and the compound (B) including a dienophilic structure is preferably bismaleimide.

## Description

### Technical Field

The present invention relates to a curable resin composition containing a curable compound having a specific structure, a cured article, and a laminated product containing a layer of the cured article.

### Background Art

Cured articles obtained by thermally curing phenolic resins, epoxy resins, and the like are excellent in heat resistance, mechanical strength, electrical properties, and adhesiveness, and are essential materials in various fields such as electrical and electronic applications, paints, and adhesives.

On the other hand, cured articles using thermosetting resins have low long-term reliability. For example, cracks may occur when cured articles of epoxy resins undergo oxidation degradation.

In addition, the cured articles obtained once thermosetting resins are cured are less recyclable and less reusable because they cannot be dissolved in solvents (insoluble) and do not melt at high temperatures (infusible). The cured articles after use become waste, and reduction in waste and environmental load is now at issue. In addition, high adhesion performance limits ease of disassembly and reusability after use.

Therefore, cured articles using thermosetting resins are required to have a long service life, produce less waste, and be reusable. This can be effectively achieved by imparting repairability, remoldability, and ease of disassembly.

Against this background, a method to enable disassembly has been disclosed, in which a thermally decomposable compound is blended in advance with a reactive adhesive component, so that adhesive strength is reduced by a certain amount of heating after use (see, for example, PTL 1).

Furthermore, a technology related to a sealing material including an epoxy resin or the like and capable of self-repairing cracks and peeling is disclosed, in which the sealing material includes a first thermosetting resin and microcapsule particles containing a second thermosetting resin precursor (see, for example, PTL 2).

In addition to the above, there has been much research on the use of reversible bonding such as dynamic covalent bonding and supramolecular bonding in cured articles to impart repairability and remoldability.

### Citation List

### Patent Literature

PTL 1: Japanese Unexamined Patent Application Publication No. 2013-256557
PTL 2: Japanese Unexamined Patent Application Publication No. 2017-041496

### Summary of Invention

### Technical Problem

In the technology provided in PTL 1, the adhesive is disposed of after disassembly, and although substrates serving as adherends are recyclable, the overall recyclability is insufficient. The technology described in PTL 2 has a certain degree of self-repairability, but it is not a solution from the viewpoint of reuse, and the problem of waste remains when the material becomes unnecessary. Raw materials involved with the reversible bonding must ensure molecular mobility. This limits the raw materials to the use of gel-like materials that lack mechanical strength. In any case, there is a need for improvement at present. An object of the present invention is to provide a compound that is a curable resin but can easily achieve ease of disassembly, repairability, and remoldability in a cured article, as well as a curable resin composition including the same and a cured article thereof.

### Solution to Problem

As a result of diligent study, the inventors of the present invention have found that the above problem can be solved by using a curable compound having a specific structure and using the same as a curable resin composition. This finding has led to completion of the invention.

More specifically, the present invention provides the following aspects.
[1] A curable resin composition containing:
   a curable compound (A) having one or more anthracene structures and two or more curable functional groups (a) in a molecule;
   a compound (B) including a dienophilic structure; and
   a compound (C) having reactivity with the curable functional groups (a).
[2] The curable resin composition according to [1], wherein the curable functional groups (a) are each a hydroxyl group or a glycidyl ether group.
[3] The curable resin composition according to [1] or [2], wherein the curable compound (A) has an alkylene chain or an alkylene ether chain.
[4] The curable resin composition according to any one of [1] to [3], wherein the compound (B) including a dienophilic structure is a compound having two or more maleimide groups.
[5] The curable resin composition according to any one of [1] to [4], wherein the curable functional groups (a) are each a hydroxyl group, and the compound (C) having reactivity with the curable functional groups (a) is an epoxy resin.
[6] The curable resin composition according to any one of [1] to [5], wherein the curable functional groups (a) are each a glycidyl ether group, and the compound (C) having reactivity with the curable functional groups (a) is a curing agent for epoxy resin.
[7] The curable resin composition according to any one of [1] to [6], wherein a concentration of reversible bonds by Diels-Alder reaction to a total mass of curable components in the curable resin composition is 0.10 mmol/g or more.
[8] A curable resin composition, wherein the curable resin composition according to any one of [1] to [7] is one or more compositions selected from the group consisting of easy-disassembly compositions, repairable compositions, and compositions for remolding materials.
[9] A cured article made by curing the curable resin composition according to any one of [1] to [8].
[10] A laminated product having a substrate and a layer including the cured article according to [9].
[11] A heat-resistant member containing the cured article according to [9].
[12] A curable compound represented by any one of the following general formulae (1) to (3).

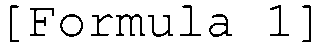

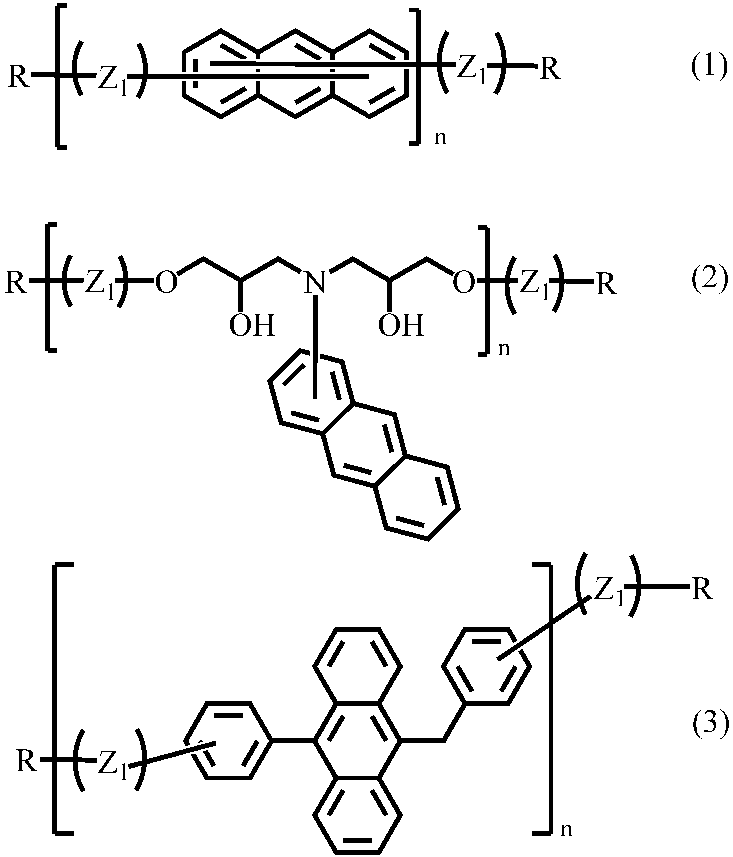

wherein R is a hydroxyl group, a glycidyl ether group, or a 2-methylglycidyl ether group;
Z₁ is any of the following (Z₁-1) to (Z₁-7), [0015] 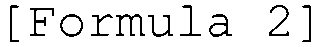 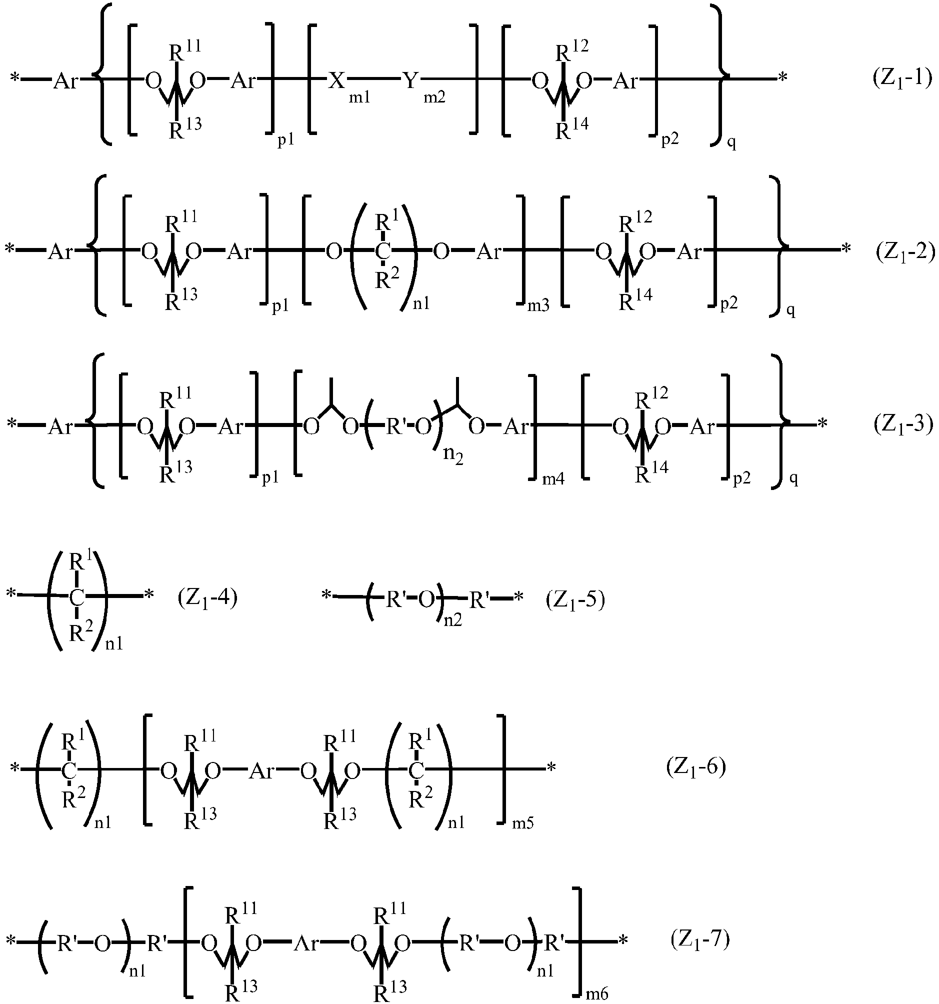
[0016] wherein
each Ar is independently a structure having an aromatic ring unsubstituted or having a substituent,
R¹¹ and R¹² are each independently a hydroxyl group, a glycidyl ether group, or a 2-methylglycidyl ether group,
R¹³ and R¹⁴ are each a hydrogen atom or a methyl group,
R¹ and R² are each independently a hydrogen atom, a methyl group, or an ethyl group,
each R' is independently a divalent hydrocarbon group having 2 to 12 carbon atoms,
n is an average number of repeating units and 0.5 to 10,
n1 is an integer of 4 to 16, and
n2 is an average number of repeating units and 2 to 30,
X in formula (Z₁-1) is a structural unit represented by the following general formula (Z₁-1-1) and Y is a structural unit represented by the following general formula (Z₁-1-2), 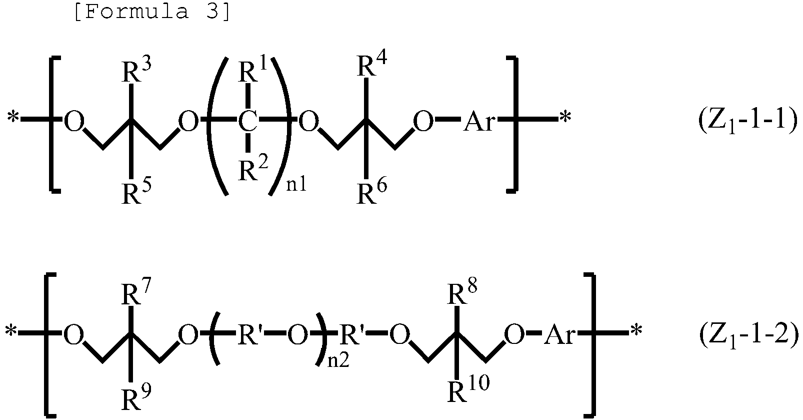
wherein Ar, R¹, R², R', n1, and n2 are as defined above,
R³, R⁴, R⁷, and R⁸ are each independently a hydroxyl group, a glycidyl ether group, or a 2-methylglycidyl ether group, and
R⁵, R⁶, R⁹, and R¹⁰ are each independently a hydrogen atom or a methyl group,
m1, m2, m3, m4, m5, m6, p1, p2, and q are each an average number of repetitions,
where m1, m2, m3, m4, m5, and m6 are each independently 0 to 25 and m1 + m2 ≥ 1,
p1 and p2 are each independently 0 to 5, and
q is 0.5 to 5,
provided that bonding between X represented by the general formula (Z₁-1-1) and Y represented by the general formula (Z₁-1-2) is optionally random or block, and total numbers of the structural units X and Y in one molecule are m1 and m2, respectively,
an aromatic ring including an anthracene skeleton in formulae (1) to (3) optionally has a substituent, and a line in the formulae indicates that being connectable at any point on a ring.

### Advantageous Effects of Invention

According to the present invention, it is possible to impart ease of disassembly, repairability, and remoldability to the cured article of the curable resin composition, contributing to a longer service life of the cured article itself and reduced waste.

### Description of Embodiments

Embodiments for carrying out the present invention will now be described in detail. It should be understood that the present invention is not limited to the following embodiments, and that design changes, improvements, and the like may be made as appropriate based on the ordinary knowledge of those skilled in the art without departing from the spirit of the present invention.

A curable resin composition according to an aspect of the present invention contains a curable compound (A) having one or more anthracene structures and two or more curable functional groups (a) in a molecule, a compound (B) including a dienophilic structure, and a compound (C) having reactivity with the curable functional groups (a).

With this configuration, the curable resin composition undergoes a Diels-Alder reaction between the anthracene structure in the curable compound (A) and the dienophile in the compound (B) including a dienophilic structure in the process of obtaining a cured article, whereby a reversible bond is formed. At the same time, the curing reaction forms a bond by covalent bonding between the curable functional group (a) in the compound (A) and the compound (C). Therefore, the resulting cured article is a cured article having both a reversible bond by the Diels-Alder reaction and a permanent crosslinked structure (covalent bond) obtained by the reaction between the curable functional group (a) and the compound (C) that can react with the curable functional group (a).

Since such a cured article has reversibility in its crosslinked structure, when the cured article is cracked or crushed on impact, the cured article is easily broken at the reversible bond and expresses ease of disassembly, while the reversible bond is reversibly reformed even at low temperatures including room temperature, thereby fulfilling functions such as repairability and remoldability. For example, even if the cured article according to the present invention is crushed, the cured article can be easily repaired based on the reversible bond by being placed at low temperatures including room temperature or under warming or heating conditions. Further, after the cured article is crushed, this can be remolded. The Diels-Alder reaction with the anthracene structure has a high bonding temperature and the cured article is durable even at relatively high temperatures. The cured article therefore can be treated in the same way as a cured article obtained from a thermosetting resin at normal temperatures.

On the other hand, a permanent crosslinked structure is formed in the cured article by forming a covalent bond between the curable functional group and the compound (C). In particular, since the compound (A) has two or more curable functional groups (a), it is possible to form a three-dimensional crosslinked structure through a curing reaction and to impart mechanical strength and heat resistance to the cured article.

As long as the curable compound (A) has one or more anthracene structures and two or more curable functional groups (a) as described above, there are no other limitations.

Examples of the curable functional group include, but are not limited to, vinyl, epoxy, hydroxyl, isocyanate, and carboxy groups. Among these, from the viewpoint of thermal curability, industrial availability of raw materials, and excellent balance of heat resistance, water resistance, moisture heat resistance, and the like of the resulting cured article, a hydroxyl group or a glycidyl ether group optionally having a substituent is preferred. From the viewpoint of industrial availability of raw materials and ease of adjusting the crosslink density when the cured article is formed, the number of curable functional groups in one molecule is preferably in the range of 2 to 5 and more preferably 2 to **3.**

Further, it is preferable that the compound (A) has a flexible structure. The inclusion of the flexible structure can even further impart flexibility and toughness to the cured article itself. Thus, the cured article can absorb impact even at sites where cracks and the like are likely to occur, or has more excellent conformability to substrates when it is used as an adhesive between substrates with different coefficients of thermal expansion. In addition, ease of disassembly, repairability, and the like are expressed because of the reversible bond, thereby contributing to the durability of the cured article. Examples of the flexible structure include partial structures that do not include an aromatic ring or an alicyclic structure, such as alkylene chain or alkylene ether chain. In this case, the alkylene chain preferably has 2 to 30 carbon atoms, and especially most preferably having 4 to 16 carbon atoms. The alkylene ether chain is preferably, but is not limited to, an alkylene ether chain having 2 to 12 carbon atoms, and preferably has an average number of repetitions in the range of 2 to 30. Furthermore, the flexible structure may have a plurality of identical or different structures in one molecule.

Furthermore, the molecular weight of the curable compound according to an aspect of the present invention is not limited and can be adjusted according to the application of a curable resin composition including the compound (B) having a dienophilic compound described later and the compound (C) having reactivity with the curable functional groups (a). For example, when the resulting curable resin composition is used for solvent-free adhesive applications and the like, the curable resin composition is preferably fluid at normal temperature. From this viewpoint, the molecular weight of the curable compound (A) is preferably in the range of 500 to 50,000 as the weight average molecular weight. From the viewpoint of the curing density of the resulting cured article, it is preferable to adjust the equivalent weight of the curable functional group. For example, in a case of having an epoxy group, the epoxy equivalent weight is preferably in the range of 200 to 30,000 g/eq, and in a case of having a hydroxyl group, the hydroxyl equivalent weight is preferably 200 to 30,000 g/eq from the viewpoint of ease of handling.

An example of the curable compound (A) can be a compound represented by any of the following general formulae (1) to (3). 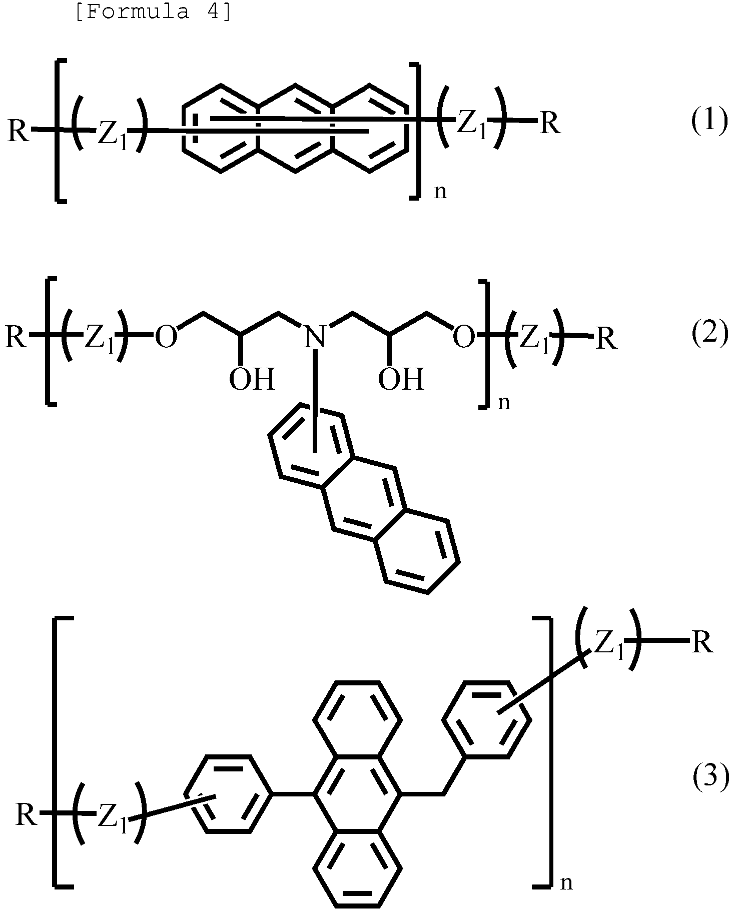
wherein R is a hydroxyl group, a glycidyl ether group, or a 2-methylglycidyl ether group;
Z₁ is any of the following (Z₁-1) to (Z₁-7), 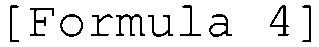 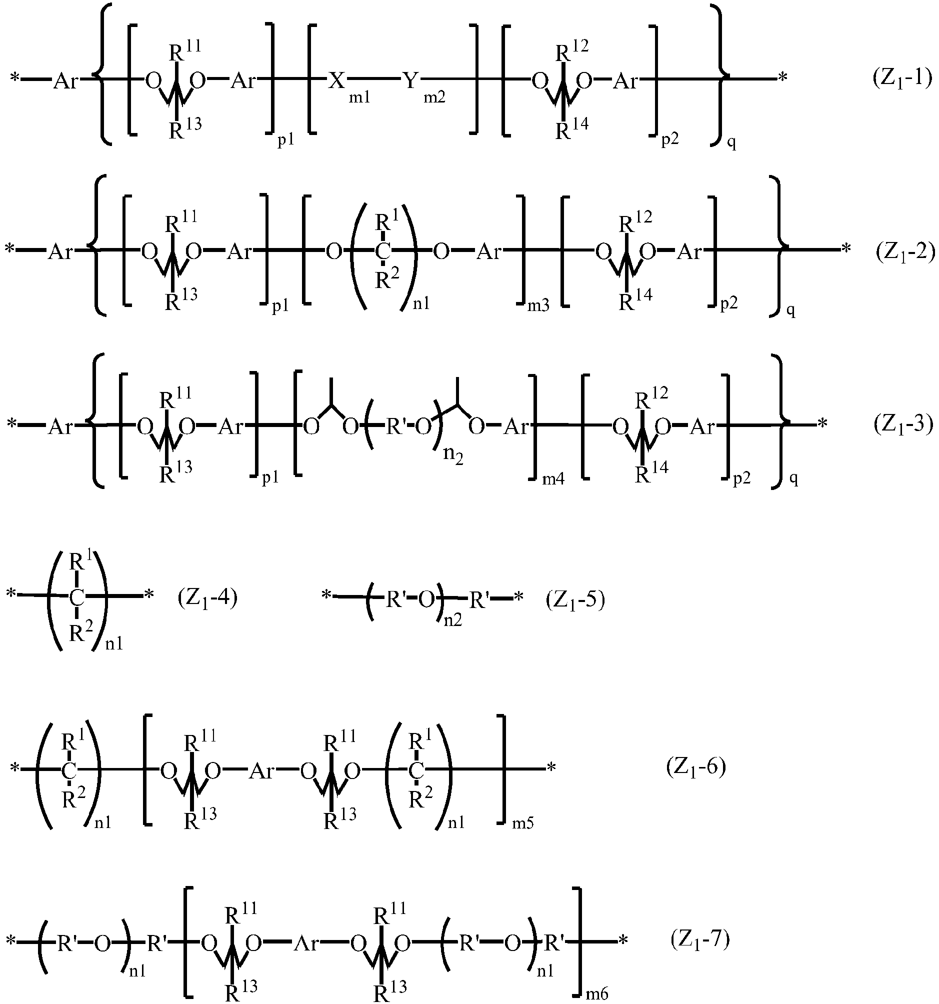
wherein
each Ar is independently a structure having an aromatic ring unsubstituted or having a substituent,
R¹¹ and R¹² are each independently a hydroxyl group, a glycidyl ether group, or a 2-methylglycidyl ether group,
R¹³ and R¹⁴ are each a hydrogen atom or a methyl group,
R¹ and R² are each independently a hydrogen atom, a methyl group, or an ethyl group,
each R' is independently a divalent hydrocarbon group having 2 to 12 carbon atoms,
n is an average number of repeating units and 0.5 to 10,
n1 is an integer of 4 to 16, and
n2 is an average number of repeating units and 2 to 30,
X in formula (Z₁-1) is a structural unit represented by the following general formula (Z₁-1-1) and Y is a structural unit represented by the following general formula (Z₁-1-2), 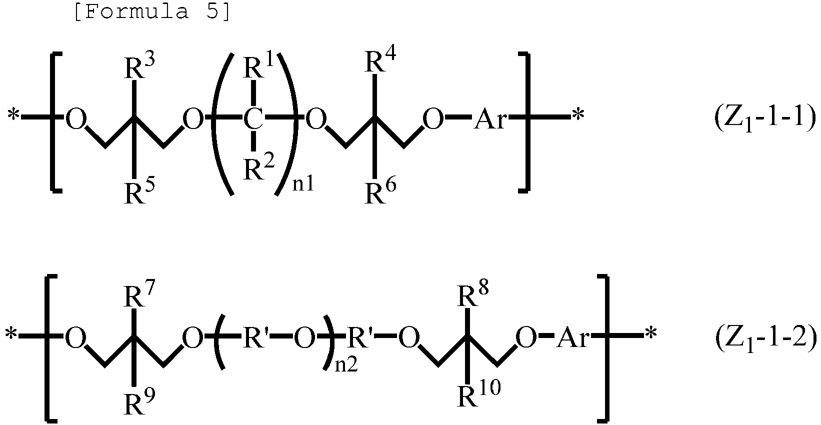
wherein Ar, R¹, R², R', n1, and n2 are as defined above,
R³, R⁴, R⁷, and R⁸ are each independently a hydroxyl group, a glycidyl ether group, or a 2-methylglycidyl ether group, and
R⁵, R⁶, R⁹, and R¹⁰ are each independently a hydrogen atom or a methyl group,
m1, m2, m3, m4, m5, m6, p1, p2, and q are each an average number of repetitions,
where m1, m2, m3, m4, m5, and m6 are each independently 0 to 25 and m1 + m2 ≥ 1,
p1 and p2 are each independently 0 to 5, and
q is 0.5 to 5,
provided that bonding between X represented by the general formula (Z₁-1-1) and Y represented by the general formula (Z₁-1-2) is optionally random or block, and total numbers of the structural units X and Y in one molecule are m1 and m2, respectively,
an aromatic ring including an anthracene skeleton in formulae (1) to (3) optionally has a substituent, and a line in the formulae indicates that being connectable at any point on a ring.
Ar in the above general formula is an aromatic ring optionally having a substituent, and is not limited. Examples of the aromatic ring include benzene, naphthalene, anthracene, phenanthrene, and fluorene rings. Examples of the substituent include halogen atom, alkoxy, aralkyloxy, aryloxy, nitro, amide, alkyloxycarbonyl, aryloxycarbonyl, cyano, alkyl, cycloalkyl, aralkyl, and aryl groups. It is preferable that the substituent on Ar does not cause a curing reaction when used as a curable resin composition, so that the effect of the present invention is more easily expressed.

Among these, Ar is preferably a structure represented by any of the following structural formulae. A line in the formulae indicates being connectable at any point on a ring. 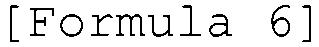 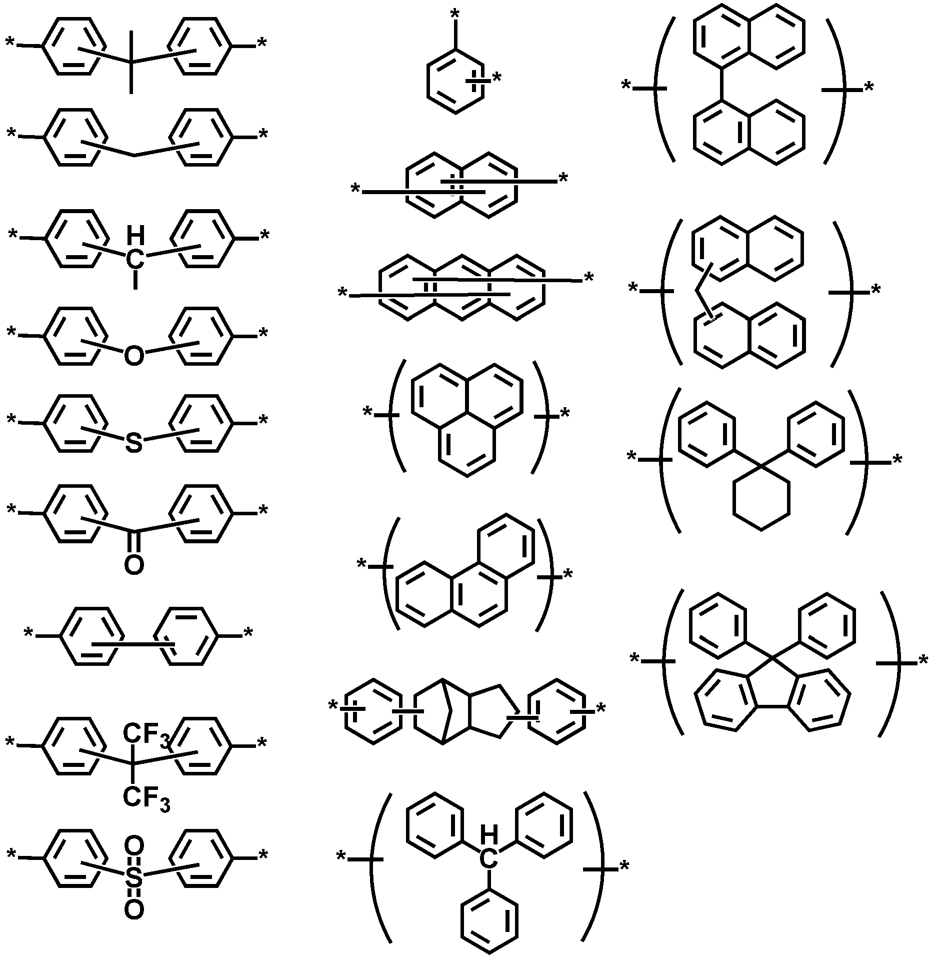 wherein the aromatic ring may be substituted or unsubstituted, and * represents a bonding point.

Other examples of Ar are structures represented by the following formulae. 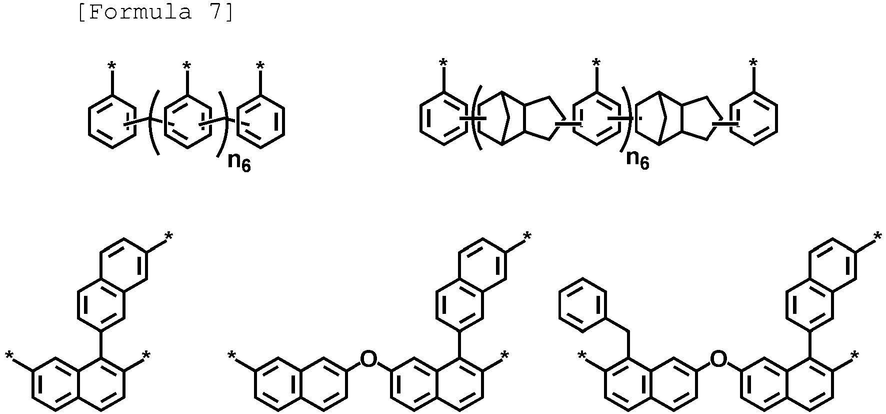 wherein the aromatic ring may be substituted or unsubstituted, n₆ is 1 to 4, and * represents a bonding point.

The following structures of Ar are particularly preferred. * represents a bonding point.

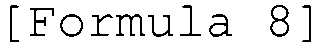

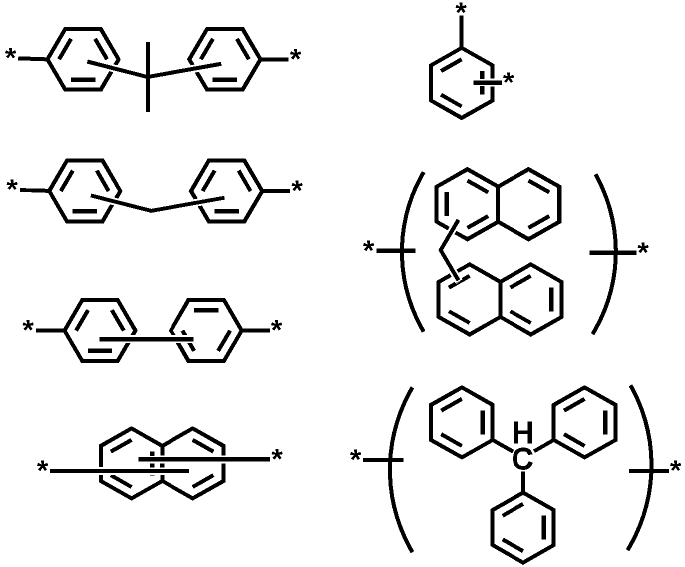

In the above general formula, the repeating unit n1 is an integer of 2 to 16. When n1 is 4 or more, the deformation mode of the cured article is likely to be elastic deformation. When n1 is equal to or less than 16, a decrease in crosslink density can be suppressed. Preferably n1 is 4 to 15 and even more preferably 6 to 12.

In the above general formula, R¹ and R² are each independently a hydrogen atom, a methyl group, or an ethyl group, preferably a hydrogen atom. R¹³, R¹⁴, R⁵, R⁶, R⁹, and R¹⁰ are each a hydrogen atom or a methyl group, preferably a hydrogen atom.

In the above general formula, n2 is an average number of repeating units and 2 to 30. This range is preferred because if so, the balance between the viscosity of the curable compound and the crosslink density of the resulting cured article is good. Preferably n2 is 2 to 25 and even more preferably 4 to 20.

In the above general formula, R' is a divalent hydrocarbon group having 2 to 12 carbon atoms. In this range, adhesive strength is improved and the deformation mode of the cured article is likely to be elastic deformation. Preferably, R' is a divalent hydrocarbon group having 2 to 6 carbon atoms.

Examples of the divalent hydrocarbon group include, but are not limited to, linear or branched alkylene, alkenylene, alkynylene, cycloalkylene, arylene, and aralkylene groups (divalent groups having alkylene and arylene groups).

Examples of the alkylene group include methylene, ethylene, propylene, butylene, pentylene, hexylene, trimethylene, tetramethylene, pentamethylene, and hexamethylene groups. Examples of the alkenylene group include vinylene, 1-methylvinylene, propenylene, butenylene, and pentenylene groups. Examples of the alkynylene group include ethynylene, propynylene, butynylene, pentynylene, and hexynylene groups. Examples of the cycloalkylene group include cyclopropylene, cyclobutylene, cyclopentylene, and cyclohexylene groups. Examples of the arylene group include phenylene, tolylene, xylylene, and naphthylene groups.

Among these, ethylene, propylene, and tetramethylene groups are preferred from the viewpoint of availability of raw materials and the balance between the viscosity of the resulting curable compound and the flexibility of the cured article.

In the above general formula, m1 and m2 are the average numbers of repetitions of the above structural unit X and structural unit Y, respectively, and are each independently 0 to 25, and m1 + m2 ≥ 1. Preferably, m1 and m2 are each in the range of 0.5 to 10. m1 and m2 are each independently 0 to 25, and each preferably in the range of 0.5 to 10.

Examples of the curable compound according to the present invention include, but are not limited to, those represented below.

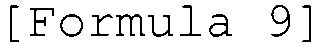

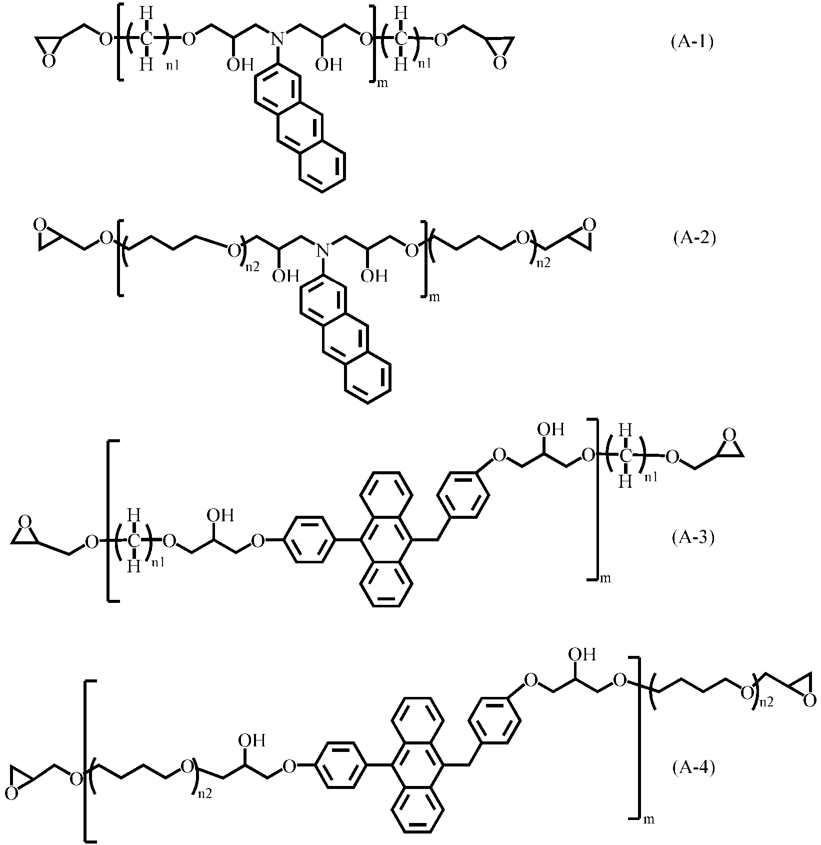

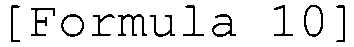

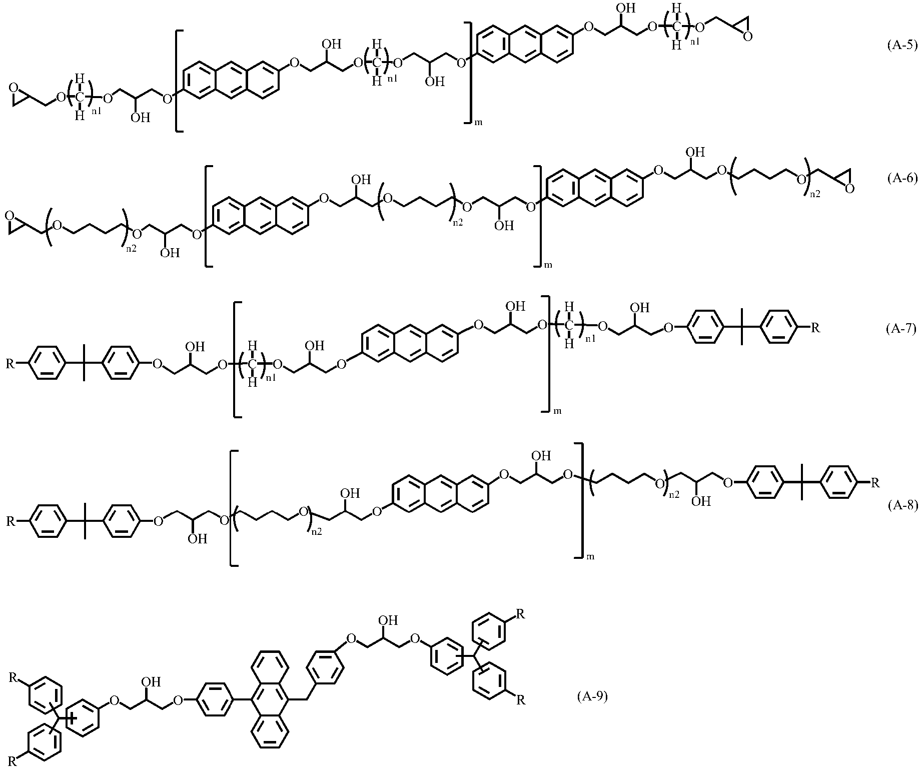

In each of the above structural formulae, R is a hydroxyl group, a glycidyl ether group, or a 2-methylglycidyl ether group, n1 is an integer of 4 to 16, n2 and m are each an average number of repetitions, n2 is 2 to 30, and m is 0.5 to 10.

The curable compound according to an aspect of the present invention can be synthesized by a known method. For example, the compound represented by the general formula (1) can be easily obtained by an elongation reaction using anthracenediol, and a polyglycidyl ether compound, a polyvinyl ether or polyhalogenated alkylene compound, using an excess of anthracenediol when the curable reactive group is a hydroxyl group, or using an excess of a polyglycidyl ether compound when a glycidyl ether group is the curable reactive group. In this case, the polyglycidyl ether compound may be used alone or a plurality of polyglycidyl ether compounds with different structures may be used in combination. Other hydroxyl group-containing compounds may be used in combination to the extent that the curing in the present invention is not impaired.

Examples of the anthracenediol include the following. Various substituents may be present on the anthracene skeletons as listed below, but from the viewpoint of facilitating the effects of the present invention, it is preferable that the substituents do not have reactivity.

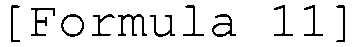

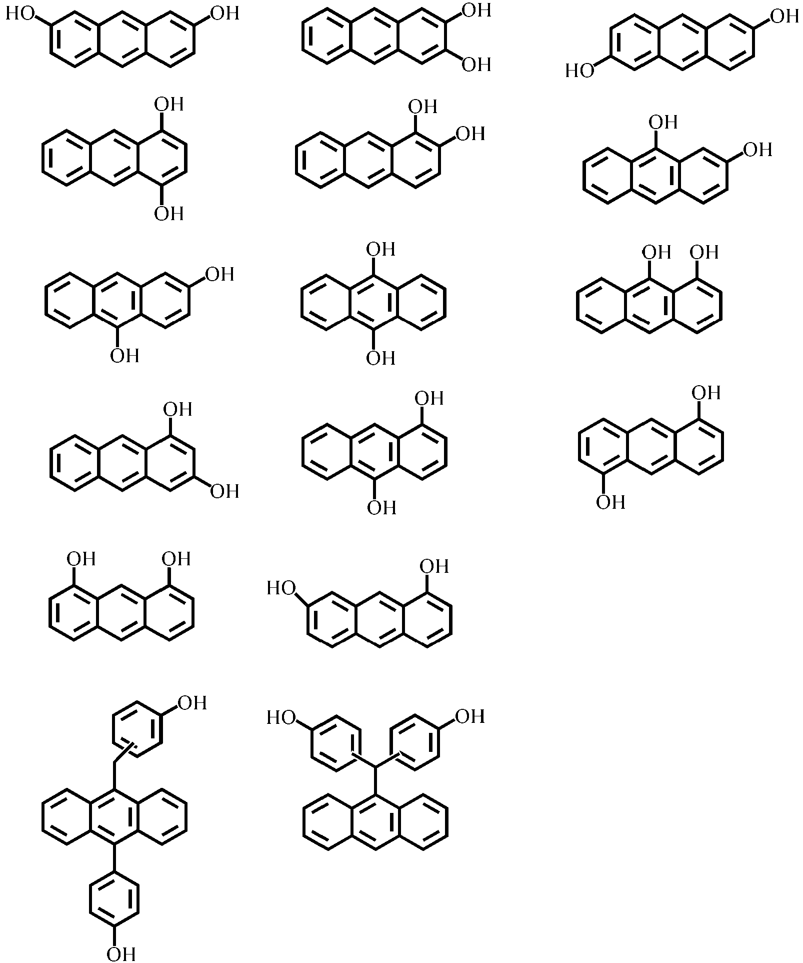

The polyglycidyl ether compound is not particularly limited, but preferably a diglycidyl ether compound because if so, it is easy to prepare the curable compound (A). Furthermore, from the viewpoint of easy introduction of a flexible structure in the curable compound (A), it is preferable to use a diglycidyl ether compound containing an alkylene chain or an alkylene ether chain.

Examples of the glycidyl ether compound having an alkylene chain or an alkylene ether chain are not limited. Examples of the diglycidyl ether having an alkylene chain include 1,4-butanediol diglycidyl ether, 1,6-hexanediol diglycidyl ether, 1,9-nonanediol diglycidyl ether, 1,11-undecanediol diglycidyl ether, 1,12-dodecanediol diglycidyl ether, 1,13-tridecanediol diglycidyl ether, 1,14-tetradecanediol diglycidyl ether, 1,15-pentadecanediol diglycidyl ether, 1,16-hexadecanediol diglycidyl ether, **2-**methyl-1,11-undecanediol diglycidyl ether, 3-methyl-1,11-undecanediol diglycidyl ether, and 2,6,10-trimethyl-1,11-undecanediol diglycidyl ether. Examples of the glycidyl ether compound having an alkylene ether chain include polyethylene glycol diglycidyl ether, polypropylene glycol diglycidyl ether, polytetramethylene glycol diglycidyl ether, polypentamethylene glycol diglycidyl ether, polyhexamethylene glycol diglycidyl ether, and polyheptamethylene glycol diglycidyl ether. These compounds may contain organochlorine impurities formed in the glycidyl etherification of a hydroxy compound, and may contain organochlorine such as 1-chloromethyl-2-glycidyl ether (chloromethyl form) represented by the following structure. These glycidyl ether compounds may be used alone or in combination of two or more.

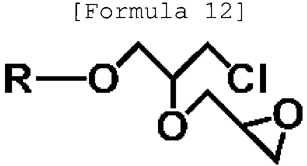

Among these, in terms of excellent balance between flexibility and heat resistance of the resulting cured article, 1,4-butanediol diglycidyl ether, 1,6-hexanediol diglycidyl ether, 1,9-nonanediol diglycidyl ether, 1,12-dodecanediol diglycidyl ether, polyethylene glycol diglycidyl ether, polypropylene glycol diglycidyl ether, and polytetramethylene glycol diglycidyl ether are preferred.

When the curable reactive group is a hydroxyl group, the reaction ratio of the glycidyl ether compound having an alkylene chain or an alkylene ether chain to the anthracenediol is preferably in the range of 1.0/1.01 to 1.0/5.0 (molar ratio), and preferably 1.0/1.02 to 1.0/3.0 (molar ratio) in order to achieve a good balance between flexibility and heat resistance of the resulting cured article. Alternatively, when a glycidyl ether group is the curable reactive group, the reaction ratio of the glycidyl ether compound having an alkylene chain or an alkylene ether chain to the anthracenediol is preferably in the range of 1.01/1.0 to 5.0/1.0 (molar ratio), and preferably 1.02/1.0 to 3.0/1.0 (molar ratio) in order to achieve a good balance between flexibility and heat resistance of the resulting cured article.

The reaction of the glycidyl ether compound having an alkylene chain or an alkylene ether chain with the anthracenediol is preferably carried out in the presence of a catalyst. A variety of the catalysts can be used as the catalyst, and examples include alkali (earth) metal hydroxides such as sodium hydroxide, potassium hydroxide, lithium hydroxide, and calcium hydroxide, alkali metal carbonates such as sodium carbonate and potassium carbonate, phosphorus compounds such as triphenylphosphine, DMP-30, DMAP, quaternary ammonium salts such as chlorides, bromides, and iodides of tetramethylammonium, tetraethylammonium, tetrabutylammonium, and benzyltributylammonium, and chlorides, bromides, iodides of tetramethylphosphonium, tetraethylphosphonium, tetrabutylphosphonium, and benzyltributylphosphonium, tertiary amines such as triethylamine, N,N-dimethylbenzylamine, 1,8-diazabicyclo[5.4.0]undecene, and 1,4-diazabicyclo[2.2.2]octane, and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferred because they allow the reaction to proceed quickly and are highly effective in reducing the amount of impurities. The amount of these catalysts used is not particularly limited, but it is preferable to use 0.0001 to 0.01 mole per mole of the hydroxyl group of the anthracenediol. The form of these catalysts is not limited, and the catalysts may be used in the form of an aqueous solution or in the form of a solid.

The reaction of the glycidyl ether compound having an alkylene chain or an alkylene ether chain with the anthracenediol can be carried out in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of organic solvent used is usually 50 to 300% by mass, preferably 100 to 250% by mass, relative to the total mass of the raw materials prepared. These organic solvents can be used alone or in mixture. The absence of a solvent is preferred to allow the reaction to proceed quickly. On the other hand, the use of dimethyl sulfoxide is preferred to reduce impurities in the final product.

The reaction temperature of the reaction is usually 50 to 180°C, and the reaction time is usually 1 to 10 hours. A reaction temperature of 100 to 160°C is preferred in order to reduce impurities in the final product. If the resulting compound is significantly colored, an antioxidant or a reducing agent may be added to suppress the coloring. Examples of the antioxidant include, but are not limited to, hindered phenol compounds such as 2,6-dialkylphenol derivatives, divalent sulfur compounds, and phosphite ester compounds containing trivalent phosphorus atoms. Examples of the reducing agent include, but are not limited to, hypophosphorous acid, phosphorous acid, thiosulfuric acid, sulfurous acid, hydrosulfite, and salts thereof.

After completion of the reaction, the reaction mixture may be neutralized or washed with water until the pH value of the reaction mixture reaches 3 to **7,** preferably 5 to **7.** The neutralization and the washing with water can be performed according to a usual method. For example, when a basic catalyst is used, an acidic substance such as hydrochloric acid, sodium hydrogen phosphate, **p-**toluenesulfonic acid, or oxalic acid can be used as a neutralizer. After neutralization or washing with water, if necessary, the solvent is distilled off under reduced pressure and heating to concentrate the product, resulting in the compound.

The polyvinyl ether compound is not particularly limited, but preferably a divinyl ether compound because if so, it is easy to prepare the curable compound (A). Furthermore, from the viewpoint of easy introduction of a flexible structure in the curable compound (A), it is preferable to use an aliphatic divinyl ether compound containing an alkylene chain or an alkylene ether chain.

The reaction of the aliphatic divinyl ether with the anthracenediol can be carried out in the absence of a solvent or in the presence of an organic solvent. Examples of the organic solvent include aromatic organic solvents such as benzene, toluene, and xylene; ketone organic solvents such as acetone, methyl ethyl ketone, methyl isobutyl ketone, and cyclohexanone; and alcohol organic solvents such as methanol, ethanol, and isopropyl alcohol normal butanol. The amount of organic solvent used is usually 50 to 300% by mass, preferably 100 to 250% by mass, relative to the total mass of the raw materials prepared. These organic solvents can be used alone or in mixture.

The reaction temperature of the reaction is usually 50 to 150°C, and the reaction time is usually 0.5 to 10 hours. In this case, the reaction under an oxygen atmosphere is preferred in order to prevent self-polymerization of the vinyl ether group.

After completion of the reaction, when an organic solvent is used, it is removed under reduced pressure and heating, and when a catalyst is used, it is deactivated by a deactivating agent or the like, if necessary, and removed by washing with water or filtration, resulting in the compound.

The polyhalogenated alkylene compound is not particularly limited, but preferably a dihalogenated alkylene compound because if so, it is easy to prepare the curable compound (A).

The reaction ratio of the dihalogenated alkylene compound to the anthracenediol is preferably in the range of 1.0/1.01 to 1/5.0 (molar ratio), and preferably 1.0/1.1 to 1.0/3.0 (molar ratio) in order to achieve a good balance between flexibility and heat resistance of the resulting cured article.

The reaction of the anthracenediol with the dihalogenated alkylene compound is preferably carried out in the presence of a basic compound. A variety of the basic compounds can be used, and examples include alkali (earth) metal hydroxides such as sodium hydroxide, potassium hydroxide, lithium hydroxide, and calcium hydroxide; and alkali metal carbonates such as sodium carbonate and potassium carbonate. Two or more of these basic compounds can be used in combination. Among these, sodium hydroxide, potassium hydroxide, and potassium carbonate are preferred because they allow the reaction to proceed quickly and are highly effective in reducing the amount of impurities. The amount of these basic compounds used is not particularly limited, but it is preferable to use 0.0001 to 10 moles per mole of the hydroxyl group of the anthracenediol. The form of these basic compounds is not limited, and the basic compounds may be used in the form of an aqueous solution or in the form of a solid. A catalyst can be used in the reaction, and examples of the catalyst include quaternary ammonium salts such as tetra-n-butylammonium bromide, benzyltriethylammonium chloride, cetyltrimethylammonium bromide, cetylpyridinium bromide, tetra-n-butylammonium chloride, tetra-n-butylammonium hydroxide, tetra-n-butylammonium iodide, tetraethylammonium chloride, benzyltributylammonium bromide, benzyltriethylammonium bromide, hexadecyltriethylammonium chloride, tetramethylammonium chloride, hexadecyltrimethylammonium chloride, crown ethers, and potassium iodide.

The reaction of the anthracenediol with the dihalogenated alkylene compound can be carried out in the absence of a solvent or in the presence of an organic solvent. Examples of the organic solvent that can be used include toluene, acetone, methyl ethyl ketone (MEK), methyl isobutyl ketone, acetonitrile, and dimethyl formamide. The amount of organic solvent used is usually 50 to 300% by mass, preferably 100 to 1000% by mass, relative to the total mass of the raw materials prepared. These organic solvents can be used alone or in mixture.

The reaction temperature of the reaction is usually room temperature to 150°C, and the reaction time is usually 1 to 24 hours. A reaction temperature of room temperature to 100°C is preferred in order to reduce impurities in the final product.

Further, a diglycidyl ether of an aliphatic dihydroxy compound or an aliphatic divinyl ether, or a dihalogenated alkylene compound can be reacted with an aromatic hydroxy compound to obtain a compound having a hydroxyl group at the end, which is then epoxidized to form a glycidyl ether group at the end, and the resulting compound can be reacted with the anthracenediol described above to obtain a curable compound (A).

As the diglycidyl ether of the aliphatic dihydroxy compound, those described above as the glycidyl ether group-containing compound having an alkylene chain or an alkylene ether chain can be used similarly. The preferred compounds are also the same.

Examples of the aliphatic divinyl ether include, but are not limited to, divinyl ethers of linear alkylene groups such as polyethylene glycol divinyl ether, polypropylene glycol divinyl ether, polytetramethylene glycol divinyl ether, 1,3-butylene glycol divinyl ether, 1,4-butanediol divinyl ether, 1,6-hexanediol divinyl ether, 1,9-nonanediol divinyl ether, 1,10-decanediol divinyl ether; divinyl ethers of branched alkylene groups such as neopentyl glycol divinyl ether; and divinyl ethers containing cycloalkane structures such as 1,4-cyclohexanediol divinyl ether, 1,4-cyclohexanedimethanol divinyl ether, tricyclododecanediol divinyl ether, tricyclodecanedimethanol divinyl ether, pentacyclopentadecanedimethanol divinyl ether, and pentacyclopentadecanediol divinyl ether. These may be used alone or in combination of two or more.

Among these, divinyl ethers of a polyether structure or a linear alkylene structure are preferred in terms of excellent balance of flexibility and toughness of the resulting cured article. Polyethylene glycol divinyl ether, polypropylene glycol divinyl ether, polytetramethylene glycol divinyl ether, 1,12-dodecanediol diglycidyl ether, 1,13-tridecanediol, and 1,14-tetradecanediol diglycidyl ether are most preferred.

Examples of the dihalogenated alkylene compound include, but are not limited to, 1,4-dichlorobutane, 1,5-dichloropentane, 1,6-dichlorohexane, 1,7-dichloroheptane, 1,8-dichlorooctane, 1,9-dichlorononane, 1,10-dichlorodecane, 1,11-dichloroundecane, 1,12-dichlorododecane, 1,4-dibromobutane, 1,5-dibromopentane, 1,6-dibromohexane, 1,7-dibromoheptane, 1,8-dibromooctane, 1,9-dibromononane, 1,10-dibromodecane, 1,11-dibromoundecane, and 1,12-dibromododecane. These may be used alone or in combination of two or more.

Examples of the aromatic hydroxy compound include, but are not limited to, dihydroxybenzenes such as hydroquinone, resorcin, and catechol; trihydroxybenzenes such as pyrogallol, 1,2,4-trihydroxybenzene, and 1,3,5-trihydroxybenzene; triphenylmethane-type phenols such as 4,4',4''-trihydroxy triphenylmethane; dihydroxynaphthalenes such as 1,6-dihydroxynaphthalene, 2,7-dihydroxynaphthalene, 1,4-dihydroxynaphthalene, 1,5-dihydroxynaphthalene, 2,3-dihydroxynaphthalene, and 2,6-dihydroxynaphthalene; tetrafunctional phenols such as 1,1'-methylenebis-(2,7-naphthalenediol), 1,1'-binaphthalene-2,2',7,7'-tetraol, and 1,1'-oxibis-(2,7-naphthalenediol) obtained by a coupling reaction of dihydroxynaphthalenes; bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; biphenols such as 2,2'-biphenol, 4,4'-biphenol, (1,1'-biphenyl)-3,4-diol, 3,3'-dimethyl-(1,1'-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4'-diol, 3'-methyl-(1,1'-biphenyl)-3,4'-diol, and 4'-methyl-(1,1'-biphenyl)-3,4'-diol; alicyclic structure-containing phenols such as polyaddition product of phenol and dicyclopentadiene, and polyaddition product of phenol and terpene compound; naphthols such as bis(2-hydroxy-1-naphthyl)methane and bis(2-hydroxy-1-naphthyl) propane; and so-called xylok-type phenolic resin, which is a condensation reaction product of phenol and phenylenedimethyl chloride or biphenylenedimethyl chloride. These may be used alone or in combination of two or more. Other examples include bifunctional phenolic compounds having a structure in which a methyl group, a t-butyl group, or a halogen atom is substituted as a substituent in the aromatic nucleus of each of the above compounds. The alicyclic structure-containing phenols and the xylok-type phenolic resin, which may contain not only bifunctional components but also tri- or higher functional components, may be used as they are. Alternatively, only the bifunctional components may be extracted and used through a purification process such as column purification.

Among these, bisphenols are preferred in terms of excellent balance of flexibility and toughness of the cured article. In particular, bis(4-hydroxyphenyl)methane and 2,2-bis(4-hydroxyphenyl)propane are preferred in terms of outstanding performance in imparting toughness. When moisture resistance of the cured article is important, alicyclic structure-containing phenols are preferred.

The reaction ratio of the diglycidyl ether of the aliphatic dihydroxy compound to the aromatic hydroxy compound is preferably in the range of 1.0/1.01 to 1.0/5.0 (molar ratio), and preferably 1.0/1.02 to 1.0/3.0 (molar ratio) in order to achieve a good balance between flexibility and heat resistance of the resulting cured article.

The reaction of the diglycidyl ether of the aliphatic dihydroxy compound with the aromatic hydroxy compound is preferably carried out in the presence of a catalyst. A variety of the catalysts can be used as the catalyst, and examples include alkali (earth) metal hydroxides such as sodium hydroxide, potassium hydroxide, lithium hydroxide, and calcium hydroxide, alkali metal carbonates such as sodium carbonate and potassium carbonate, phosphorus compounds such as triphenylphosphine, DMP-30, DMAP, quaternary ammonium salts such as chlorides, bromides, and iodides of tetramethylammonium, tetraethylammonium, tetrabutylammonium, and benzyltributylammonium, and chlorides, bromides, iodides of tetramethylphosphonium, tetraethylphosphonium, tetrabutylphosphonium, and benzyltributylphosphonium, tertiary amines such as triethylamine, N,N-dimethylbenzylamine, 1,8-diazabicyclo[5.4.0]undecene, and 1,4-diazabicyclo[2.2.2]octane, and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferred because they allow the reaction to proceed quickly and are highly effective in reducing the amount of impurities. The amount of these catalysts used is not particularly limited, but it is preferable to use 0.0001 to 0.01 mole per mole of the phenolic hydroxyl group of the aromatic hydroxy compound. The form of these catalysts is not limited, and the catalysts may be used in the form of an aqueous solution or in the form of a solid.

The reaction of the diglycidyl ether of the aliphatic dihydroxy compound with the aromatic hydroxy compound can be carried out in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of organic solvent used is usually 50 to 300% by mass, preferably 100 to 250% by mass, relative to the total mass of the raw materials prepared. These organic solvents can be used alone or in mixture. The absence of a solvent is preferred to allow the reaction to proceed quickly. On the other hand, the use of dimethyl sulfoxide is preferred to reduce impurities in the final product.

The reaction temperature of the reaction is usually 50 to 180°C, and the reaction time is usually 1 to 10 hours. A reaction temperature of 100 to 160°C is preferred in order to reduce impurities in the final product. If the resulting compound is significantly colored, an antioxidant or a reducing agent may be added to suppress the coloring. Examples of the antioxidant include, but are not limited to, hindered phenol compounds such as 2,6-dialkylphenol derivatives, divalent sulfur compounds, and phosphite ester compounds containing trivalent phosphorus atoms. Examples of the reducing agent include, but are not limited to, hypophosphorous acid, phosphorous acid, thiosulfuric acid, sulfurous acid, hydrosulfite, and salts thereof.

After completion of the reaction, the reaction mixture may be neutralized or washed with water until the pH value of the reaction mixture reaches 3 to 7, preferably 5 to 7. The neutralization and the washing with water can be performed according to a usual method. For example, when a basic catalyst is used, an acidic substance such as hydrochloric acid, sodium hydrogen phosphate, p-toluenesulfonic acid, or oxalic acid can be used as a neutralizer. After neutralization or washing with water, if necessary, the solvent is distilled off under reduced pressure and heating to concentrate the product, resulting in the compound.

The reaction ratio of the aliphatic divinyl ether to the aromatic hydroxy compound is preferably in the range of 1.0/1.01 to 1.0/5.0 (molar ratio), and preferably 1.0/1.02 to 1.0/3.0 (molar ratio) in order to achieve a good balance between flexibility and heat resistance of the resulting cured article.

The reaction of the diglycidyl ether of the aliphatic dihydroxy compound with the aromatic hydroxy compound proceeds sufficiently without the use of a catalyst, but a catalyst may be used as appropriate in terms of selection of raw materials and increasing the reaction rate. Examples of the catalyst that can be used herein include inorganic acids such as sulfuric acid, hydrochloric acid, nitric acid, and phosphoric acid; organic acids such as toluenesulfonic acid, methanesulfonic acid, xylenesulfonic acid, trifluoromethanesulfonic acid, oxalic acid, formic acid, trichloroacetic acid, and trifluoroacetic acid; and Lewis acids such as aluminum chloride, iron chloride, tin chloride, gallium chloride, titanium chloride, aluminum bromide, gallium bromide, boron trifluoride ether complex, and boron trifluoride phenol complex. The amount of catalyst used is usually in the range of 10 ppm to 1% by mass relative to the mass of the divinyl ether compound. In this case, it is preferable to select the type and amount used so as not to cause a nuclear addition reaction of the vinyl group to the aromatic ring.

The reaction of the aliphatic divinyl ether with the aromatic hydroxy compound can be carried out in the absence of a solvent or in the presence of an organic solvent. Examples of the organic solvent include aromatic organic solvents such as benzene, toluene, and xylene; ketone organic solvents such as acetone, methyl ethyl ketone, methyl isobutyl ketone, and cyclohexanone; and alcohol organic solvents such as methanol, ethanol, and isopropyl alcohol normal butanol. The amount of organic solvent used is usually 50 to 300% by mass, preferably 100 to 250% by mass, relative to the total mass of the raw materials prepared. These organic solvents can be used alone or in mixture.

The reaction temperature of the reaction is usually 50 to 150°C, and the reaction time is usually 0.5 to 10 hours. In this case, the reaction under an oxygen atmosphere is preferred in order to prevent self-polymerization of the vinyl ether group.

After completion of the reaction, when an organic solvent is used, it is removed under reduced pressure and heating, and when a catalyst is used, it is deactivated by a deactivating agent or the like, if necessary, and removed by washing with water or filtration, resulting in the compound.

The reaction ratio of the dihalogenated alkylene compound to the aromatic hydroxy compound is preferably in the range of 1.0/1.01 to 1.0/5.0 (molar ratio), and preferably 1.0/1.1 to 1.0/3.0 (molar ratio) in order to achieve a good balance between flexibility and heat resistance of the resulting cured article.

The reaction of the aromatic hydroxy compound with the dihalogenated alkylene compound is preferably carried out in the presence of a basic compound. A variety of the basic compounds can be used, and examples include alkali (earth) metal hydroxides such as sodium hydroxide, potassium hydroxide, lithium hydroxide, and calcium hydroxide; and alkali metal carbonates such as sodium carbonate and potassium carbonate. Two or more of these basic compounds can be used in combination. Among these, sodium hydroxide, potassium hydroxide, and potassium carbonate are preferred because they allow the reaction to proceed quickly and are highly effective in reducing the amount of impurities. The amount of these basic compounds used is not particularly limited, but it is preferable to use 0.0001 to 10 moles per mole of the phenolic hydroxyl group of the aromatic hydroxy compound. The form of these basic compounds is not limited, and the basic compounds may be used in the form of an aqueous solution or in the form of a solid. A catalyst can be used in the reaction, and examples of the catalyst include quaternary ammonium salts such as tetra-n-butylammonium bromide, benzyltriethylammonium chloride, cetyltrimethylammonium bromide, cetylpyridinium bromide, tetra-n-butylammonium chloride, tetra-n-butylammonium hydroxide, tetra-n-butylammonium iodide, tetraethylammonium chloride, benzyltributylammonium bromide, benzyltriethylammonium bromide, hexadecyltriethylammonium chloride, tetramethylammonium chloride, hexadecyltrimethylammonium chloride, crown ethers, and potassium iodide.

The reaction of the aromatic hydroxy compound with the dihalogenated alkylene compound can be carried out in the absence of a solvent or in the presence of an organic solvent. Examples of the organic solvent that can be used include toluene, acetone, methyl ethyl ketone (MEK), methyl isobutyl ketone, acetonitrile, and dimethyl formamide. The amount of organic solvent used is usually 50 to 300% by mass, preferably 100 to 1000% by mass, relative to the total mass of the raw materials prepared. These organic solvents can be used alone or in mixture.

The reaction temperature of the reaction is usually room temperature to 150°C, and the reaction time is usually 1 to 24 hours. A reaction temperature of room temperature to 100°C is preferred in order to reduce impurities in the final product.

The glycidyl etherification reaction of the precursor (intermediate) hydroxy compound obtained above can be carried out by any method, for example, by reaction of a phenolic hydroxyl group with epihalohydrin, or by olefination of a phenolic hydroxyl group and oxidation of the carbon-carbon double bond of the olefin with an oxidizing agent. Among these, the method using epihalohydrin is preferred because of availability of raw materials and ease of reaction.

In the method using epihalohydrin, for example, 0.3 to 100 moles of epihalohydrin is added per mole of the aromatic hydroxyl group of the hydroxy compound obtained above, and to this mixture, 0.9 to 2.0 moles of a basic catalyst per mole of the aromatic hydroxyl group of the hydroxy compound is added in batch or gradually while the reaction is carried out at a temperature of 20 to 120°C for 0.5 to 10 hours. The higher the excess amount of epihalohydrin added, the resulting epoxy resin is closer to the theoretical structure and the formation of a secondary hydroxyl group produced by the reaction between the unreacted aromatic hydroxyl group and the epoxy group can be suppressed. From this point of view, it is preferable to use an amount in the range of 2.5 to 100 equivalents. The basic catalyst may be used in a solid form or in an aqueous solution. When an aqueous solution is used, the aqueous solution may be added continuously, and water and epihalohydrin are continuously distilled from the reaction mixture under reduced or normal pressure, and further separated so that water is removed and epihalohydrin is continuously returned to the reaction mixture.

When epihalohydrin is reacted, an accelerator such as quaternary ammonium salt may be used in combination to increase the reaction rate. A variety of the quaternary ammonium salts can be used, and examples include tetra-n-butylammonium bromide, benzyltriethylammonium chloride, cetyltrimethylammonium bromide, cetylpyridinium bromide, tetra-n-butylammonium chloride, tetra-n-butylammonium hydroxide, tetra-n-butylammonium iodide, tetraethylammonium chloride, benzyltributylammonium bromide, benzyltriethylammonium bromide, hexadecyltriethylammonium chloride, tetramethylammonium chloride, and hexadecyltrimethylammonium chloride.

In industrial production, the whole amount of the epihalohydrin used for preparation in a first batch of production of the epoxy resin is new, and after the next batch, epihalohydrin collected from a crude reaction product and new epihalohydrin in an amount corresponding to the amount of the epihalohydrin consumed and lost in the reaction are preferably used in combination. At that time, the used epihalohydrin is not particularly limited. Examples thereof include epichlorohydrin and epibromohydrin. Among these, epichlorohydrin is preferred since it is easily available.

Examples of the basic catalyst include, but are not limited to, alkaline earth metal hydroxides, alkali metal carbonates, and alkali metal hydroxides. Among these, an alkali metal hydroxide is preferred because of excellent catalytic activity in the epoxy resin synthesis reaction. For example, sodium hydroxide and potassium hydroxide are preferred. In use, these alkali metal hydroxides may be used in the form of an aqueous solution of about 10 to 55% by mass or may be used in the form of a solid.

The reaction rate in synthesis of the epoxy resin can be increased by using an organic solvent in combination. Examples of the organic solvent include, but are not limited to, ketones such as acetone and methyl ethyl ketone; alcohols such as methanol, ethanol, 1-propyl alcohol, isopropyl alcohol, 1-butanol, secondary butanol, and tertiary butanol; cellosolves such as methyl cellosolve and ethyl cellosolve; ethers such as tetrahydrofuran, 1,4-dioxane, 1,3-dioxane, and diethoxyethane; and aprotic polar solvents such as acetonitrile, dimethyl sulfoxide, and dimethylformamide. These organic solvents may be used alone or may be used in combination of two or more as appropriate in order to adjust polarity.

After the reaction product of these glycidylation reactions is washed with water, the unreacted epihalohydrin and the organic solvent used in combination are removed by distillation under heating and reduced pressure. In order to obtain the epoxy resin in which the amount of hydrolyzable halogen is small, the obtained epoxy resin is dissolved again in an organic solvent such as toluene, methyl isobutyl ketone, or methyl ethyl ketone, and an aqueous solution of alkali metal hydroxide such as sodium hydroxide or potassium hydroxide is added resulting in an additional reaction. At that time, a phase-transfer catalyst such as a quaternary ammonium salt or a crown ether may be used in order to increase the reaction rate.

When the phase-transfer catalyst is used, the amount of the phase-transfer catalyst used is preferably 0.1 to 3.0% by mass of the epoxy resin used. After completion of the reaction, a produced salt is removed by filtration, water-washing, and the like, and the solvent such as toluene or methyl isobutyl ketone is distilled off under heating and reduced pressure, resulting in the high-purity resin.

The curable compound (A) according to the present invention can be obtained by reacting the thus obtained resin having a glycidyl ether group at the end with anthracenediol in the same manner as described above.

As for the compound (A) represented by the general formula (2), the compound (A) in which the curable reactive group is a glycidyl ether group can be obtained by reacting aminoanthracene with the polyglycidyl ether compound. In this case, the preferred polyglycidyl ether compound is a diglycidyl ether compound as described above, and for the same reason, it is preferable to use the compound having an alkylene chain or an alkylene ether chain described above.

Examples of the aminoanthracene include the following. Various substituents may be present on the anthracene skeletons as listed below, but from the viewpoint of facilitating the effects of the present invention, it is preferable that the substituents do not have reactivity.

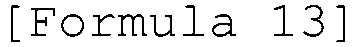

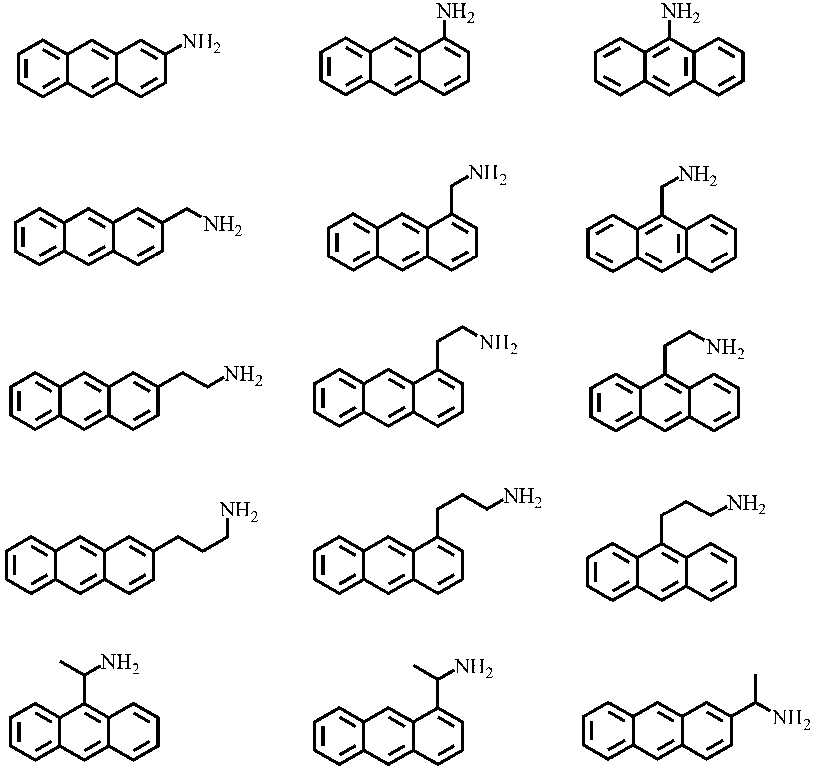

The reaction ratio of the glycidyl ether compound to the aminoanthracene is preferably in the range of 1.01/1.0 to 5.0/1.0 (molar ratio), and preferably 1.02/1.0 to 3.0/1.0 (molar ratio) in order to achieve a good balance between flexibility and heat resistance of the resulting cured article.

The reaction of the glycidyl ether compound with the aminoanthracene is preferably carried out in the presence of a catalyst. A variety of the catalysts can be used as the catalyst, and examples include alkali (earth) metal hydroxides such as sodium hydroxide, potassium hydroxide, lithium hydroxide, and calcium hydroxide, alkali metal carbonates such as sodium carbonate and potassium carbonate, phosphorus compounds such as triphenylphosphine, DMP-30, DMAP, quaternary ammonium salts such as chlorides, bromides, and iodides of tetramethylammonium, tetraethylammonium, tetrabutylammonium, and benzyltributylammonium, and chlorides, bromides, iodides of tetramethylphosphonium, tetraethylphosphonium, tetrabutylphosphonium, and benzyltributylphosphonium, tertiary amines such as triethylamine, N,N-dimethylbenzylamine, 1,8-diazabicyclo[5.4.0]undecene, and 1,4-diazabicyclo[2.2.2]octane, and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferred because they allow the reaction to proceed quickly and are highly effective in reducing the amount of impurities. The amount of these catalysts used is not particularly limited, but it is preferable to use 0.0001 to 0.01 mole per mole of the glycidyl ether group of the glycidyl ether compound. The form of these catalysts is not limited, and the catalysts may be used in the form of an aqueous solution or in the form of a solid.

The reaction of the glycidyl ether compound with the aminoanthracene can be carried out in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of organic solvent used is usually 50 to 300% by mass, preferably 100 to 250% by mass, relative to the total mass of the raw materials prepared. These organic solvents can be used alone or in mixture. The absence of a solvent is preferred to allow the reaction to proceed quickly. On the other hand, the use of dimethyl sulfoxide is preferred to reduce impurities in the final product.

The reaction temperature of the reaction is usually 50 to 160°C, and the reaction time is usually 1 to 10 hours. A reaction temperature of 100 to 130°C is preferred in order to reduce impurities in the final product. If the resulting compound is significantly colored, an antioxidant or a reducing agent may be added to suppress the coloring. Examples of the antioxidant include, but are not limited to, hindered phenol compounds such as 2,6-dialkylphenol derivatives, divalent sulfur compounds, and phosphite ester compounds containing trivalent phosphorus atoms. Examples of the reducing agent include, but are not limited to, hypophosphorous acid, phosphorous acid, thiosulfuric acid, sulfurous acid, hydrosulfite, and salts thereof.

After completion of the reaction, the reaction mixture may be neutralized or washed with water until the pH value of the reaction mixture reaches 3 to 7, preferably 5 to 7. The neutralization and the washing with water can be performed according to a usual method. For example, when a basic catalyst is used, an acidic substance such as hydrochloric acid, sodium hydrogen phosphate, p-toluenesulfonic acid, or oxalic acid can be used as a neutralizer. After neutralization or washing with water, if necessary, the solvent is distilled off under reduced pressure and heating to concentrate the product, resulting in the compound.

The thus obtained compound having an anthracene structure with a diglycidyl ether group at an end can be reacted with a compound having two or more hydroxyl groups to obtain a compound in which the curable functional group (a) is a hydroxyl group.

As for the compound (A) represented by the general formula (3), the compound (A) in which the curable reactive group is a glycidyl ether group can be obtained by using an anthracene-containing compound containing a hydroxyl group as follows as a raw material, and by reacting with a polyglycidyl ether compound in the same manner as described above. In this case, the preferred polyglycidyl ether compound is a diglycidyl ether compound as described above, and for the same reason, it is preferable to use the compound having an alkylene chain or an alkylene ether chain described above.

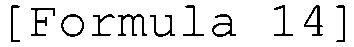

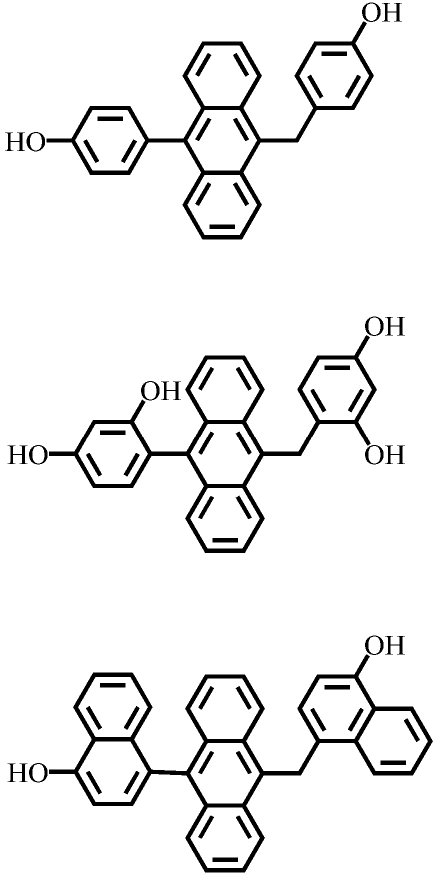

Further, the compound (A) in which the curable reactive group is a hydroxy group can be obtained by further reacting with an aromatic hydroxy compound in the same manner as described above.

As for the compound (A) represented by the general formula (3), the compound (A) in which the curable reactive group is a hydroxy group can be obtained by using an anthracene-containing compound containing an epoxy group as follows as a raw material and by reacting with an aromatic hydroxy compound in the same manner as described above. In this case, the preferred aromatic hydroxy compound is bisphenols as described above, and for the same reason, bis(4-hydroxyphenyl)methane and 2,2-bis(4-hydroxyphenyl) propane are also preferred. When moisture resistance of the cured article is important, alicyclic structure-containing phenols are preferred.

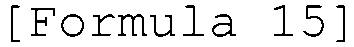

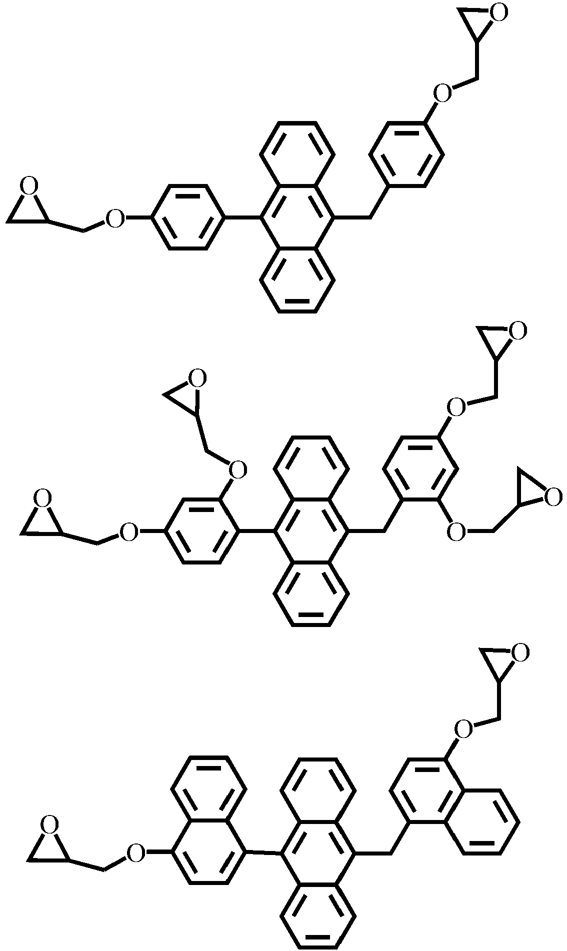

Further, this can be epoxidized to form a glycidyl ether group at the end in the same manner as described above to obtain the compound (A) in which the curable reactive group is an epoxy group.

The cured article according to an aspect of the present invention includes a reversible bond of the compound (B) having a dienophilic structure with the anthracene structure in the curable compound (A) by the Diels-Alder reaction.

The compound (B) having a dienophilic structure may be monofunctional, but is preferably bi- or higher functional in order to impart more performance to the cured article.

The reversible bond by the Diels-Alder reaction is an addition reaction between the conjugated diene and the dienophile to form a six-membered ring. Since the Diels-Alder reaction is an equilibrium reaction, a Retro-Diels-Alder reaction occurs at a predetermined temperature and dissociation (de-crosslinking) occurs. This reversibility is maintained even after the cured article (three-dimensional crosslinked structure) is formed. Therefore, when the cured article is subjected to mechanical energy such as scratches or external force, the C-C bond of the Diels-Alder reaction unit is preferentially broken due to the lower bonding energy of the C-C bond of the Diels-Alder reaction unit compared with normal covalent bonds. However, the C-C bond of the Diels-Alder reaction unit forms an adduct (Diels-Alder reaction unit) again because equilibrium shifts in the bonding direction in a temperature region below the dissociation temperature. This is thought to enable damage repair and remolding.

Examples of the compound (B) including a dienophilic structure include, but are not limited to, compounds having maleimide group, acryloyl group, vinyl ketone group, acetylene group, allyl group, diazo group, nitro group, benzoquinone skeleton, and the like. Among these, a compound having a maleimide group is preferred from the viewpoint of balance between the reactivity in use as a curable resin composition and the ease of disassembly and remoldability of the cured article. A compound having two or more maleimide groups in one molecule is preferred from the viewpoint of further expressing the effect of remoldability.

Examples of the compound having a maleimide group are as follows.

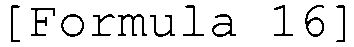

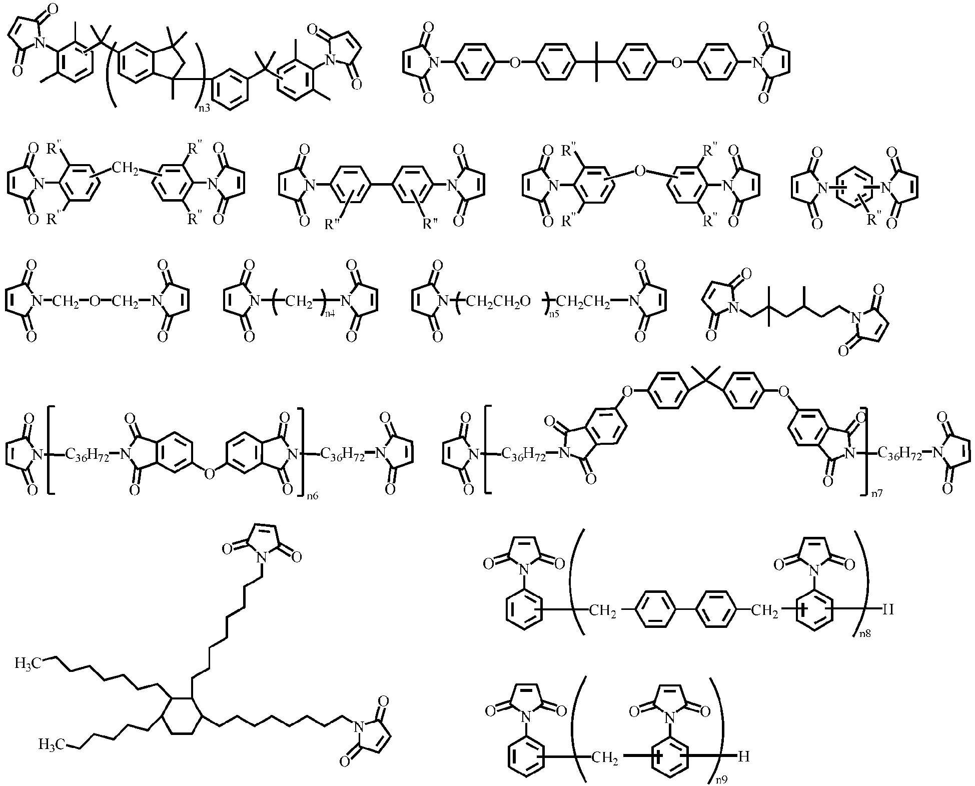

The above n3, n5, n6, n7, n8, and n9 are each an average number of repetitions and 0.5 to 10, n4 is an integer of 1 to 16, and each R" is independently a hydrogen atom, a methyl group, or an ethyl group.

The above compound having a maleimide group includes those each independently having a hydrogen atom, a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent. In the structures of the compounds listed in the above formulae, the alkoxy group, aralkyloxy group, aryloxy group, carboxy group, alkyloxycarbonyl group, aryloxycarbonyl group, alkyl group, cycloalkyl group, aralkyl group, and aryl group also include those having carbon atoms to which various substituents are bonded.

The curable resin composition according to an aspect of the present invention includes the curable compound (A), the compound including a dienophilic structure (B), and the compound (C) having reactivity with the curable functional groups (a) as essentials. In this case, it is possible to react the compound (A) and the compound (B) in advance and thereafter perform a curing reaction with the compound (C). However, from the viewpoint of ease of handling, it is preferable to use the compounds (A) to (C) simultaneously and allow them to react.

The compound (C) having reactivity with the curable functional group at the end is not particularly limited.

When the curable functional group at the end is a hydroxyl group, examples of the compound (C) include melamine compounds substituted with at least one group selected from methylol group, alkoxymethyl group, and acyloxymethyl group, guanamine compounds, glycol urea compounds, urea compounds, resol resins, epoxy resins, isocyanate compounds, azide compounds, compounds containing double bonds such as alkenyl ether group, acid anhydrides, hexamethylenetetramine and its modified products, and oxazoline compounds. Among these, epoxy resins are preferred from the viewpoint of good curability and easy handling.

Examples of the melamine compounds include hexamethylolmelamine, hexamethoxymethylmelamine, compounds in which one to six methylol groups of hexamethylolmelamine are methoxymethylated, hexamethoxyethylmelamine, hexaacyloxymethylmelamine, and compounds in which one to six methylol groups of hexamethylolmelamine are acyloxymethylated.

Examples of the guanamine compounds include tetramethylolguanamine, tetramethoxymethylguanamine, tetramethoxymethylbenzoguanamine, compounds in which one to four methylol groups of tetramethylolguanamine are methoxymethylated, tetramethoxyethylguanamine, tetraacyloxyguanamine, and compounds in which one to four methylol groups of tetramethylolguanamine are acyloxymethylated.

Examples of the glycoluryl compounds include 1,3,4,6-tetrakis(methoxymethyl)glycoluryl, 1,3,4,6-tetrakis(butoxymethyl)glycoluryl, and 1,3,4,6-tetrakis(hydroxymethyl)glycoluryl.

Examples of the urea compounds include 1,3-bis(hydroxymethyl)urea, 1,1,3,3-tetrakis(butoxymethyl)urea, and 1,1,3,3-tetrakis(methoxymethyl)urea.

Examples of the resol resins include polymers obtained by reacting a phenolic hydroxyl group-containing compound such as phenol, alkylphenol such as cresol and xylenol, phenylphenol, resorcinol, biphenyl, bisphenol such as bisphenol A and bisphenol F, naphthol, or dihydroxynaphthalene with an aldehyde compound under alkaline catalytic conditions.

Examples of the epoxy resins include liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin, brominated epoxy resins such as brominated phenol novolac epoxy resin, solid bisphenol A epoxy resin, phenol novolac epoxy resin, cresol novolac epoxy resin, triphenylmethane epoxy resin, tetraphenylethane epoxy resin, dicyclopentadiene-phenol addition reaction-type epoxy resin, phenol aralkyl epoxy resin, phenylene ether epoxy resin, naphthylene ether epoxy resin, naphthol novolac epoxy resin, naphthol aralkyl epoxy resin, naphthol-phenol co-condensed novolac epoxy resin, naphthol-cresol co-condensed novolac epoxy resin, aromatic hydrocarbon formaldehyde resin-modified phenol resin epoxy resin, and biphenyl-modified novolac epoxy resin. These may be used alone or in combination of two or more. It is preferable to select and use various types according to the intended use and physical properties of the cured article.

Examples of the isocyanate compounds include tolylene diisocyanate, diphenylmethane diisocyanate, hexamethylene diisocyanate, and cyclohexane diisocyanate.

Examples of the azide compounds include 1,1'-biphenyl-4,4'-bisazide, 4,4'-methylidenebisazide, and 4,4'-oxybisazide.

Examples of the compounds containing double bonds such as alkenyl ether group include ethylene glycol divinyl ether, triethylene glycol divinyl ether, 1,2-propanediol divinyl ether, 1,4-butanediol divinyl ether, tetramethylene glycol divinyl ether, neopentyl glycol divinyl ether, trimethylolpropane trivinyl ether, hexanediol divinyl ether, 1,4-cyclohexanediol divinyl ether, pentaerythritol trivinyl ether, pentaerythritol tetravinyl ether, sorbitol tetravinyl ether, sorbitol pentavinyl ether, and trimethylolpropane trivinyl ether.

Examples of the acid anhydrides include aromatic acid anhydrides such as phthalic anhydride, trimellitic anhydride, pyromellitic anhydride, 3,3',4,4'-benzophenonetetracarboxylic dianhydride, biphenyltetracarboxylic dianhydride, 4,4'-(isopropylidene)diphthalic anhydride, 4,4'-(hexafluoroisopropylidene)diphthalic anhydride; and alicyclic carboxylic acid anhydrides such as tetrahydrophthalic anhydride, methyltetrahydrophthalic anhydride, hexahydrophthalic anhydride, methylhexahydrophthalic anhydride, endomethylenetetrahydrophthalic anhydride dodecenyl succinic anhydride, and trialkyltetrahydrophthalic anhydride.

Furthermore, when the curable functional group in the curable compound is a hydroxyl group, which is combined with an epoxy resin to form a curable resin composition, a curing agent for epoxy resin may be blended.

Examples of the curing agent that can be used herein include various known curing agents for epoxy resins, such as amine compounds, acid anhydrides, amide compounds, phenolic hydroxyl group-containing compounds, carboxylic acid compounds, and thiol compounds.

Examples of the amine compounds include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo[2,2,2]octane(triethylenediamine), polyoxyethylenediamine, polyoxypropylenediamine, bis(2-dimethylaminoethyl) ether, dimethylaminoethoxy ethoxyethanol, triethanolamine, dimethylaminohexanol, benzylmethylamine, dimethylbenzylamine, m-xylenediamine, and α-methylbenzylmethylamine;
alicyclic and heterocyclic amine compounds such as piperidine, piperazine, menthanediamine, isophoronediamine, methylmorpholine, ethylmorpholine, N,N',N"- tris(dimethylaminopropyl)hexahydro-s-triazine, a 3,9-bis(3-aminopropyl)-2,4,8,10-tetraoxaspiro[5,5]undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);
aromatic amine compounds such as o-phenylenediamine, m-phenylenediamine, p-phenylenediamine, diaminodiphenylmethane, diaminodiphenyl sulfone, pyridine, and picoline; and
modified amine compounds such as an epoxy compound- added polyamine, a polyamine obtained by Michael addition, a polyamine obtained by Mannich addition, a thiourea-added polyamine, a ketone-capped polyamine, dicyandiamide, guanidine, an organic acid hydrazide, diaminomaleonitrile, amineimide, a boron trifluoride-piperidine complex, and a boron trifluoride-monoethylamine complex.

Examples of the acid anhydrides include phthalic anhydride, trimellitic anhydride, pyromellitic anhydride, maleic anhydride, maleic anhydride polypropylene glycol, tetrahydrophthalic anhydride, methyltetrahydrophthalic anhydride, methyl nadic anhydride, hexahydrophthalic anhydride, and methylhexahydrophthalic anhydride.

Examples of the phenolic hydroxyl group-containing compounds include bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; and polyhydric phenol compounds such as a phenol novolac resin, a cresol novolac resin, an aromatic hydrocarbon formaldehyde resin-modified phenolic resin, a dicyclopentadiene phenol-added resin, a phenol aralkyl resin (xylok resin), a naphthol aralkyl resin, a trimethylolmethane resin, a tetraphenylolethane resin, a naphthol novolac resin, a naphthol-phenol co-condensed novolac resin, a naphthol-cresol co-condensed novolac resin, a biphenyl-modified phenolic resin (a polyhydric phenol compound having a phenolic nucleus linked through a bismethylene group), a biphenyl-modified naphthol resin (a polyhydric naphthol compound having a phenolic nucleus linked through a bismethylene group), an aminotriazine-modified phenolic resin (a polyhydric phenol compound having a phenolic nucleus linked through melamine, benzoguanamine, or the like), and an alkoxy group-containing aromatic ring-modified novolac resin (a polyhydric phenol compound in which a phenolic nucleus and an alkoxy group-containing aromatic ring are linked through formaldehyde).

Examples of the amide compounds include dicyandiamide and polyamidoamines. Examples of the polyamidoamines include polyamidoamines obtained by a reaction of an aliphatic dicarboxylic acid such as succinic acid, glutaric acid, adipic acid, pimelic acid, suberic acid, or azelaic acid, or a carboxylic acid compound such as a fatty acid or a dimer acid with an aliphatic polyamine or a polyamine having a polyoxyalkylene chain.

Examples of the carboxylic acid compounds include carboxylic acid polymers such as carboxylic acid-terminated polyester, polyacrylic acid, and maleic acid-modified polypropylene glycol.

The thiol compound is preferably a compound containing two or more thiol groups in one molecule. Examples include 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate, trimethylolpropane tris(3-mercaptopropionate), pentaerythritol tetrakis(3-mercaptopropionate), pentaerythritol tetrakis(3-mercaptobutyrate), dipentaerythritol hexakis(3-mercaptopropionate), 1,3,4,6-tetrakis(2-mercaptoethyl)glycoluril, 4-butanedithiol, 1,6-hexanedithiol, and 1,10-decanedithiol.

When these curing agents are used, one type of the curing agents may be used alone, or two or more types thereof may be mixed. For applications such as underfill materials and general coating applications, it is preferable to use the amine compounds, the carboxylic acid compounds, and/or the acid anhydride compounds. For adhesive and flexible wiring board applications, the amine compounds, especially dicyandiamide, are preferred in terms of workability, curability, and long-term stability. For semiconductor sealing material applications, solid-type phenol compounds are preferred in terms of heat resistance of the cured article. For battery applications, aliphatic amines and thiol compounds are preferred in terms of low-temperature curing.

When an epoxy resin is used, the curable resin composition may contain a curing accelerator. As the curing accelerator, various compounds can be used. Examples thereof include urea compounds, phosphorus compounds, tertiary amines, imidazoles, imidazolines, organic acid metal salts, Lewis acids, and amine complex salts. For use in adhesive applications, urea compounds, especially 3-(3,4-dichlorophenyl)-1,1-dimethylurea (DCMU), are preferred since they are excellent in workability and low-temperature curability. For use in semiconductor sealing material applications, triphenyl phosphine as a phosphorus compound and 1,8-diazabicyclo-[5.4.0]-undecene as a tertiary amine are preferred since they are excellent in curability, heat resistance, electrical characteristics, moisture-resistant reliability, and the like.

Examples of the phosphorus compounds include alkyl phosphines such as ethylphosphine and butylphosphine, primary phosphines such as phenylphosphine; dialkyl phosphines such as dimethylphosphine and dipropylphosphine; secondary phosphines such as diphenylphosphine and methylethylphosphine; and tertiary phosphines such as trimethylphosphine, triethylphosphine, and triphenylphosphine.

Examples of the imidazoles include imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, a 2-phenylimidazole isocyanuric acid adduct, a 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, and 1-benzyl-2-phenylimidazole hydrochloride.

Examples of the imidazoline compounds include 2-methylimidazoline and 2-phenylimidazoline.

Examples of the urea compounds include p-chlorophenyl-N,N-dimethyl urea, 3-phenyl-1,1-dimethyl urea, 3-(3,4-dichlorophenyl)-N,N-dimethyl urea, and N-(3-chloro-4-methylphenyl)-N',N'-dimethyl urea.

When the curable functional group at the end is a glycidyl ether group, examples of the compound (C) include various known curing agents for epoxy resins, such as amine compounds, acid anhydrides, amide compounds, phenolic hydroxyl group-containing compounds, carboxylic acid compounds, and thiol compounds. The curing agent can be selected as appropriate according to physical properties of the target cured article, and in particular, a hydroxyl group-containing compound is preferred from the viewpoint of mechanical strength and adhesion to a substrate.

Examples of the amine compounds include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'- tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo[2,2,2]octane(triethylenediamine), polyoxyethylenediamine, polyoxypropylenediamine, bis(2-dimethylaminoethyl) ether, dimethylaminoethoxy ethoxyethanol, triethanolamine, dimethylaminohexanol, benzylmethylamine, dimethylbenzylamine, m-xylenediamine, and α-methylbenzylmethylamine;
alicyclic and heterocyclic amine compounds such as piperidine, piperazine, menthanediamine, isophoronediamine, methylmorpholine, ethylmorpholine, N,N',N"- tris(dimethylaminopropyl)hexahydro-s-triazine, a 3,9-bis(3-aminopropyl)-2,4,8,10-tetraoxaspiro[5,5]undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);
aromatic amine compounds such as o-phenylenediamine, m-phenylenediamine, p-phenylenediamine, diaminodiphenylmethane, diaminodiphenyl sulfone, pyridine, and picoline; and
modified amine compounds such as an epoxy compound- added polyamine, a polyamine obtained by Michael addition, a polyamine obtained by Mannich addition, a thiourea-added polyamine, a ketone-capped polyamine, dicyandiamide, guanidine, an organic acid hydrazide, diaminomaleonitrile, amineimide, a boron trifluoride-piperidine complex, and a boron trifluoride-monoethylamine complex.

Examples of the acid anhydrides include phthalic anhydride, trimellitic anhydride, pyromellitic anhydride, maleic anhydride, maleic anhydride polypropylene glycol, tetrahydrophthalic anhydride, methyltetrahydrophthalic anhydride, methyl nadic anhydride, hexahydrophthalic anhydride, and methylhexahydrophthalic anhydride.

Examples of the phenolic hydroxyl group-containing compounds include bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; and polyhydric phenol compounds such as a phenol novolac resin, a cresol novolac resin, an aromatic hydrocarbon formaldehyde resin-modified phenolic resin, a dicyclopentadiene phenol-added resin, a phenol aralkyl resin (xylok resin), a naphthol aralkyl resin, a trimethylolmethane resin, a tetraphenylolethane resin, a naphthol novolac resin, a naphthol-phenol co-condensed novolac resin, a naphthol-cresol co-condensed novolac resin, a biphenyl-modified phenolic resin (a polyhydric phenol compound having a phenolic nucleus linked through a bismethylene group), a biphenyl-modified naphthol resin (a polyhydric naphthol compound having a phenolic nucleus linked through a bismethylene group), an aminotriazine-modified phenolic resin (a polyhydric phenol compound having a phenolic nucleus linked through melamine, benzoguanamine, or the like), and an alkoxy group-containing aromatic ring-modified novolac resin (a polyhydric phenol compound in which a phenolic nucleus and an alkoxy group-containing aromatic ring are linked through formaldehyde).

Examples of the amide compounds include dicyandiamide and polyamidoamines. Examples of the polyamidoamines include polyamidoamines obtained by a reaction of an aliphatic dicarboxylic acid such as succinic acid, glutaric acid, adipic acid, pimelic acid, suberic acid, or azelaic acid, or a carboxylic acid compound such as a fatty acid or a dimer acid with an aliphatic polyamine or a polyamine having a polyoxyalkylene chain.

Examples of the carboxylic acid compounds include carboxylic acid polymers such as carboxylic acid-terminated polyester, polyacrylic acid, and maleic acid-modified polypropylene glycol.

The thiol compound is preferably a compound containing two or more thiol groups in two molecules. Examples include 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate, trimethylolpropane tris(3-mercaptopropionate), pentaerythritol tetrakis(3-mercaptopropionate), pentaerythritol tetrakis(3-mercaptobutyrate), dipentaerythritol hexakis(3-mercaptopropionate), 1,3,4,6-tetrakis(2-mercaptoethyl)glycoluril, 4-butanedithiol, 1,6-hexanedithiol, and 1,10-decanedithiol.

When these curing agents are used, one type of the curing agents may be used alone, or two or more types thereof may be mixed. For applications such as underfill materials and general coating applications, it is preferable to use the amine compounds, the carboxylic acid compounds, and/or the acid anhydride compounds. For adhesive and flexible wiring board applications, the amine compounds, especially dicyandiamide, are preferred in terms of workability, curability, and long-term stability. For semiconductor sealing material applications, solid-type phenol compounds are preferred in terms of heat resistance of the cured article. For battery applications, aliphatic amines and thiol compounds are preferred in terms of low-temperature curing.

The concentration of reversible bonds in the curable resin composition of the present invention is preferably 0.10 mmol/g or more relative to the total mass of curable components in the curable resin composition. With such a configuration, all of ease of disassembly, repairability, and remoldability of the cured article obtained from the curable resin composition are further improved. The concentration of reversible bonds is more preferably 0.10 to 3.00 mmol/g, and even more preferably 0.15 to 2.00 mmol/g. The concentration of reversible bonds can be selected as appropriate according to a glass transition temperature or the like as defined by the tanδ peak top of the target cured article using a dynamic viscoelasticity analyzer (DMA). For example, when the glass transition temperature is used as a guide, sufficient repairability and remoldability functions are likely to be expressed even at low concentration in a preferred range if the glass transition temperature of the cured article is near room temperature. On the other hand, if the glass transition temperature of the target cured article is above 100°C as a guide, the functions are more likely to be expressed at high concentration in the preferred range. However, in a temperature range above the glass transition temperature measured by DMA, molecular mobility is generally high, and sufficient repairability and remoldability functions are likely to be expressed even with a low concentration of the phenolic hydroxyl group-containing compound. Therefore, the effect of expressing repairability and remoldability functions can also be adjusted, for example, by appropriately adjusting aging temperature for repair and heating temperature for remolding. Thus, the relation between the glass transition temperature of the cured article and the concentration of reversible bonds is not limited to these.

For the curable resin composition of the present invention, an epoxy resin represented by the following formula (4) and having an epoxy equivalent weight of 500 to 10000 g/eq may be used, because the curable resin composition achieves excellent curability, and mechanical strength and heat resistance in the cured article. Specifically, when the curable functional group at the end is a hydroxyl group, the following epoxy resin may be used as the compound (III). 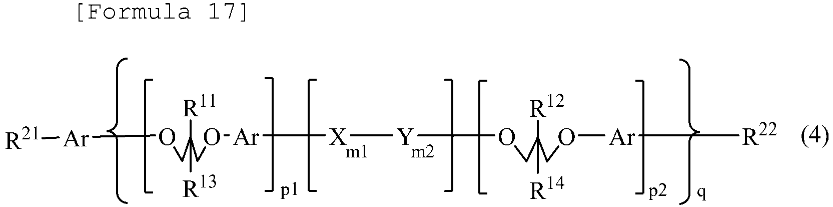
wherein each Ar is independently a structure having an aromatic ring unsubstituted or having a substituent;
X is a structural unit represented by the following general formula (4-1), and Y is a structural unit represented by the following general formula (4-2),

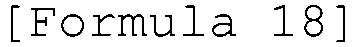

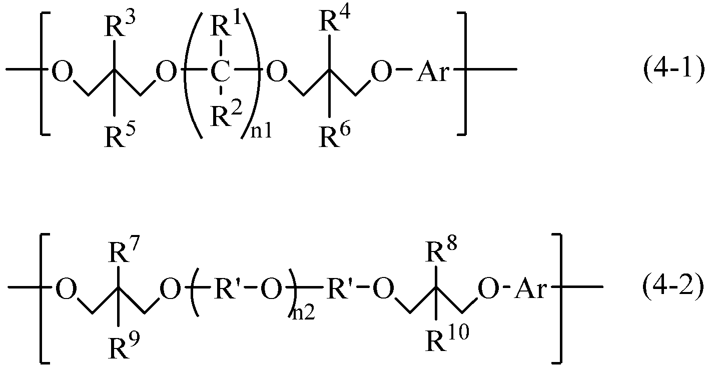

wherein R¹ and R² are each independently a hydrogen atom, a methyl group, or an ethyl group,
R' is a divalent hydrocarbon group having 2 to 12 carbon atoms,
R³, R⁴, R⁷, and R⁸ are each independently a hydroxyl group, a glycidyl ether group, or a 2-methylglycidyl ether group,
R⁵, R⁶, R⁹, and R¹⁰ are each independently a hydrogen atom or a methyl group,
n1 is an integer of 2 to 16, and
n2 is an average number of repeating units and 2 to 30;
R²¹ and R²² are each independently a glycidyl ether group or a 2-methylglycidyl ether group;
R¹¹ and R¹² are each independently a hydroxyl group, a glycidyl ether group, or a 2-methylglycidyl ether group;
R¹³ and R¹⁴ are each a hydrogen atom or a methyl group;
m1, m2, p1, p2, and q are each an average number of repetitions,
where m1 and m2 are each independently 0 to 25 and m1 + m2 ≥ 1,
p1 and p2 are each independently 0 to 5, and q is 0.5 to 5,
provided that bonding between X represented by the general formula (2-2) and Y represented by the general formula (2-3) is optionally random or block, and total numbers of the structural units X and Y in one molecule are m1 and m2, respectively.

The epoxy resin represented by the general formula (4) may be combined alone to form a curable resin composition, but preferably is combined with an epoxy resin having an epoxy equivalent weight of 100 to 300 g/eq in order to impart more flexibility to the cured article and easily express ease of disassembly.

The epoxy resin that can be combined is any epoxy resin that has an epoxy equivalent weight in the range of 100 to 300 g/eq and its structure is not limited. Examples include liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin, brominated epoxy resins such as brominated phenol novolac epoxy resins, solid bisphenol A epoxy resin, phenol novolac epoxy resin, cresol novolac epoxy resin, triphenylmethane epoxy resin, tetraphenylethane epoxy resin, dicyclopentadiene-phenol addition reaction-type epoxy resin, phenol aralkyl epoxy resin, phenylene ether epoxy resin, naphthylene ether epoxy resin, naphthol novolac epoxy resin, naphthol aralkyl epoxy resin, naphthol-phenol co-condensed novolac epoxy resin, naphthol-cresol co-condensed novolac epoxy resin, aromatic hydrocarbon formaldehyde resin-modified phenol resin epoxy resin, and biphenyl-modified novolac epoxy resin. These may be used alone or in combination of two or more. It is preferable to select and use various types according to the intended use and physical properties of the cured article.

Among these, an epoxy resin having an epoxy equivalent weight of 100 to 300 g/eq is preferred among liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin. An epoxy resin having an epoxy equivalent weight of 100 to 300 g/eq is particularly preferred among bisphenol A epoxy resin, bisphenol F epoxy resin, bisphenol S epoxy resin, and bisphenol AD epoxy resin.

The ratio of the epoxy resin represented by the general formula (4) and the epoxy resin having an epoxy equivalent weight of 100 to 300 g/eq is not limited, but from the viewpoint of easy phase separation in the cured article, the mass ratio of the former to the latter is 97:3 to 3:97, preferably 10:90 to 90:10, and particularly preferably 80:20 to 20:80. The phase separation in the cured article results in a sea-island structure, whereby both adhesiveness and stress relaxation ability are achieved in the cured article, in particular, high adhesive strength is expressed in a wide temperature range, and mold shrinkage before and after heat curing of the resin composition is reduced.

The curable resin composition of the present invention may be used in combination with other thermosetting resins or thermoplastic resins as long as the effects of the present invention are not impaired.

Examples of other thermosetting resins include cyanate ester resins, resins having benzoxazine structures, active ester resins, vinyl benzyl compounds, acrylic compounds, and copolymers of styrene and maleic anhydride. When the other thermosetting resins described above are used in combination, the amount used is not limited as long as the effects of the present invention are not impaired, but preferably in the range of 1 to 50 parts by mass in 100 parts by mass of the curable resin composition.

Examples of the cyanate ester resins include bisphenol A cyanate ester resin, bisphenol F cyanate ester resin, bisphenol E cyanate ester resin, bisphenol S cyanate ester resin, bisphenol sulfide cyanate ester resin, phenylene ether cyanate ester resin, naphthylene ether cyanate ester resin, biphenyl cyanate ester resin, tetramethylbiphenyl cyanate ester resin, polyhydroxynaphthalene cyanate ester resin, phenol novolac cyanate ester resin, cresol novolac cyanate ester resin, triphenylmethane cyanate ester resin, tetraphenylethane cyanate ester resin, dicyclopentadiene-phenol addition reaction-type cyanate ester resin, phenol aralkyl cyanate ester resin, naphthol novolac cyanate ester resin, naphthol aralkyl cyanate ester resin, naphthol-phenol co-condensed novolac cyanate ester resin, naphthol-cresol co-condensed novolac cyanate ester resin, aromatic hydrocarbon formaldehyde resin-modified phenolic resin cyanate ester resin, biphenyl modified novolac cyanate ester resin, and anthracene cyanate ester resin. These may be each used alone, or two or more types thereof may be used in combination.

Among these cyanate ester resins, bisphenol A cyanate ester resin, bisphenol F cyanate ester resin, bisphenol E cyanate ester resin, polyhydroxynaphthalene cyanate ester resin, naphthylene ether cyanate ester resin, and novolac cyanate ester resin are preferred in order to obtain a cured article with excellent heat resistance. Dicyclopentadiene-phenol addition reaction-type cyanate ester resin is preferred in order to obtain a cured article with excellent dielectric properties.

Examples of the resins having benzoxazine structures include, but are not limited to, a reaction product of bisphenol F with formalin and aniline (F-a type benzoxazine resin), a reaction product of diaminodiphenylmethane with formalin and phenol (P-d type benzoxazine resin), a reaction product of bisphenol A with formalin and aniline, a reaction product of dihydroxydiphenyl ether with formalin and aniline, a reaction product of diaminodiphenyl ether with formalin and phenol, a reaction product of dicyclopentadiene phenol-added resin with formalin and aniline, a reaction product of phenolphthalein with formalin and aniline, and a reaction product of diphenyl sulfide with formalin and aniline. These may be each used alone, or two or more types thereof may be used in combination.

Preferred examples of the active ester resins that can be used generally include, but are not limited to, compounds having two or more ester groups with high reaction activity in one molecule, such as phenol esters, thiophenol esters, N-hydroxyamine esters, and esters of heterocyclic hydroxy compounds. The active ester resin is preferably an active ester resin obtained by a condensation reaction of a carboxylic acid compound and/or a thiocarboxylic acid compound with a hydroxy compound and/or a thiol compound. From the viewpoint of heat resistance improvement, an active ester resin obtained from a carboxylic acid compound or a halide thereof and a hydroxy compound is preferred. An active ester resin obtained from a carboxylic acid compound or a halide thereof and a phenol compound and/or a naphthol compound is more preferred. Examples of the carboxylic acid compound include benzoic acid, acetic acid, succinic acid, maleic acid, itaconic acid, phthalic acid, isophthalic acid, terephthalic acid, pyromellitic acid, and halides thereof. Examples of the phenol compound or the naphthol compound include hydroquinone, resorcin, bisphenol A, bisphenol F, bisphenol S, dihydroxydiphenyl ether, phenolphthalein, methylated bisphenol A, methylated bisphenol F, methylated bisphenol S, phenol, o-cresol, m-cresol, p-cresol, catechol, α-naphthol, β-naphthol, 1,5-dihydroxynaphthalene, 1,6-dihydroxynaphthalene, 2,6-dihydroxynaphthalene, dihydroxybenzophenone, trihydroxybenzophenone, tetrahydroxybenzophenone, phloroglucin, benzenetriol, and dicyclopentadiene phenol-added resin.

As the active ester resin, specifically, an active ester resin containing a dicyclopentadiene-phenol addition structure, an active ester resin containing a naphthalene structure, an active ester resin that is acetylated phenol novolac, an active ester resin that is a benzoylated phenol novolac, and the like are preferred. Among these, the active ester resin containing a dicyclopentadiene-phenol addition structure and the active ester resin containing a naphthalene structure are more preferred since they are excellent in improving peel strength.

Furthermore, various novolac resins, addition polymerization resins of alicyclic diene compounds such as dicyclopentadiene and phenol compounds, modified novolac resins of phenolic phenolic hydroxyl group-containing compounds and alkoxy group-containing aromatic compounds, phenol aralkyl resin (xylok resin), naphthol aralkyl resin, trimethylolmethane resin, tetraphenylolethane resin, biphenyl-modified phenol resin, biphenyl-modified naphthol resin, aminotriazine-modified phenol resin, and various vinyl polymers may be used in combination.

More specifically, examples of the various novolac resins include polymers obtained by reacting a phenolic phenolic hydroxyl group-containing compound such as phenol, phenylphenol, resorcinol, biphenyl, bisphenol such as bisphenol A and bisphenol F, naphthol, or dihydroxynaphthalene with an aldehyde compound under acid catalytic conditions.

Examples of the various vinyl polymers include homopolymers or copolymers of vinyl compounds such as polyhydroxystyrene, polystyrene, polyvinylnaphthalene, polyvinylanthracene, polyvinylcarbazole, polyindene, polyacenaphthylene, polynorbornene, polycyclodecene, polytetracyclododecene, polynortricyclene, and poly(meth)acrylate.

The thermoplastic resins are resins capable of melt- molding by heating. Specific examples of the thermoplastic resins include polyethylene resin, polypropylene resin, polystyrene resin, rubber-modified polystyrene resin, acrylonitrile-butadiene-styrene (ABS) resin, acrylonitrile- styrene (AS) resin, polymethyl methacrylate resin, acrylic resin, polyvinyl chloride resin, polyvinylidene chloride resin, polyethylene terephthalate resin, ethylene vinyl alcohol resin, cellulose acetate resin, ionomer resin, polyacrylonitrile resin, polyamide resin, polyacetal resin, polybutylene terephthalate resin, polylactic acid resin, polyphenylene ether resin, modified polyphenylene ether resin, polycarbonate resin, polysulfone resin, polyphenylene sulfide resin, polyetherimide resin, polyethersulfone resin, polyarylate resin, thermoplastic polyimide resin, polyamideimide resin, polyetheretherketone resin, polyketone resin, liquid crystal polyester resin, fluororesin, syndiotactic polystyrene resin, and cyclic polyolefin resin. These thermoplastic resins may be used alone or in combination of two or more.

When these other resins are used, the blending ratio of the phenolic hydroxyl group-containing compound in the present invention to the other resins can be set as desired according to the applications, but in order to prevent impairment of repairability and remoldability of the present invention, the proportion of the other resins is preferably 0.5 to 100 parts by mass per 100 parts by mass of the phenolic hydroxyl group-containing compound in the present invention.

The curable resin composition of the present invention may be used in combination with a curing accelerator. Examples of the curing accelerator include tertiary amine compounds such as imidazole and dimethylaminopyridine; phosphorus compounds such as triphenylphosphine; boron trifluoride and boron trifluoride amine complex such as boron trifluoride monoethylamine complex; organic acid compounds such as thiodipropionic acid; benzoxazine compounds such as thiodiphenol benzoxazine and sulfonyl benzoxazine; and sulfonyl compounds. These may be each used alone, or two or more types thereof may be used in combination. The amount of these catalysts added is preferably in the range of 0.001 to 15 parts by mass in 100 parts by mass of the curable resin composition.

When the curable resin composition of the present invention is used for applications that require high flame retardancy, a halogen free flame retardant substantially containing no halogen atom may be blended.

Examples of the halogen free flame retardant include a phosphorus-containing flame retardant, a nitrogen-containing flame retardant, a silicone-based flame retardant, an inorganic flame retardant, and an organic metal salt-based flame retardant. During use of the halogen free flame retardant, there are no limits. The halogen free flame retardant may be used alone, a plurality of halogen free flame retardants of the same type may be used, or halogen free flame retardants of different types may be used in combination.

As the phosphorus-containing flame retardant, an inorganic or organic phosphorus compound may be used. Examples of the inorganic phosphorus compound include red phosphorus, ammonium phosphates such as monoammonium phosphate, diammonium phosphate, triammonium phosphate, and ammonium polyphosphate, and inorganic nitrogen-containing phosphorus compounds such as phosphoric amide.

It is preferable that the red phosphorus be surface- treated to prevent hydrolysis and the like. Examples of a surface treatment method include (i) a method for performing a covering treatment with an inorganic compound such as magnesium hydroxide, aluminum hydroxide, zinc hydroxide, titanium hydroxide, bismuth oxide, bismuth hydroxide, bismuth nitrate, or a mixture thereof, (ii) a method for performing a covering treatment with a mixture of an inorganic compound such as magnesium hydroxide, aluminum hydroxide, zinc hydroxide, or titanium hydroxide, and a thermosetting resin such as a phenol resin, and (iii) a method for performing a two-stage covering treatment in which a coating of an inorganic compound such as magnesium hydroxide, aluminum hydroxide, zinc hydroxide, or titanium hydroxide is covered with a thermosetting resin such as a phenol resin.

Examples of the organic phosphorus compound include common organic phosphorus compounds such as a phosphoric acid ester compound, a phosphonic acid compound, a phosphinic acid compound, a phosphine oxide compound, a phosphorane compound, and an organic nitrogen-containing phosphorus compound, as well as cyclic organic phosphorus compounds such as 9,10-dihydro-9-oxa-10-phosphaphenanthrene-10-oxide, 10-(2,5-dihydroxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives thereof obtained by reacting these phosphorus compounds with compounds such as epoxy resins and phenol resins.

The amount of these phosphorus-containing flame retardants blended is appropriately selected depending on the type of the phosphorus-containing flame retardant, the other component of the resin composition, and a desired degree of flame retardancy. For example, when red phosphorus is used as a halogen free flame retardant, it is preferably blended in an amount of 0.1 to 2.0 parts by mass in 100 parts by mass of the resin composition in which the halogen free flame retardant, filler and other additives are all blended. When an organic phosphorus compound is used, it is preferably blended in an amount of 0.1 to 10.0 parts by mass similarly, more preferably in an amount of 0.5 to 6.0 parts by mass.

When the phosphorus-containing flame retardant is used, hydrotalcite, magnesium hydroxide, a boron compound, zirconium oxide, a black dye, calcium carbonate, zeolite, zinc molybdate, activated carbon, or the like may be used in combination with the phosphorus-containing flame retardant.

Examples of the nitrogen-containing flame retardant include a triazine compound, a cyanuric acid compound, an isocyanuric acid compound, and phenothiazine. The triazine compound, the cyanuric acid compound, and the isocyanuric acid compound are preferred.

Examples of the triazine compound include melamine, acetoguanamine, benzoguanamine, melon, melam, succinoguanamine, ethylenedimelamine, melamine polyphosphate, and triguanamine, as well as (1) an aminotriazine sulfate compound such as guanylmelamine sulfate, melem sulfate, and melam sulfate, (2) a co-condensed product of phenols such as phenol, cresol, xylenol, butylphenol, and nonylphenol with melamines such as melamine, benzoguanamine, acetoguanamine, and formoguanamine, and formaldehyde, (3) a mixture of the co-condensed product (2) and phenol resins such as phenol formaldehyde condensate, and (4) the co-condensed product (2) or the mixture (3) further modified with tung oil, isomerized linseed oil, or the like.

Examples of the cyanuric acid compound include cyanuric acid, and melamine cyanurate.

The amount of the nitrogen-containing flame retardant blended is appropriately selected depending on the type of the nitrogen-containing flame retardant, the other component of the resin composition, and a desired degree of flame retardancy. For example, the nitrogen-containing flame retardant is preferably blended in an amount of 0.05 to 10 parts by mass, and particularly preferably 0.1 to 5 parts by mass, in 100 parts by mass of the resin composition in which the halogen free flame retardant, filler and other additives are all blended.

When the nitrogen-containing flame retardant is used, a metal hydroxide, a molybdenum compound, or the like may be used in combination.

As the silicone-based flame retardant, an organic compound containing a silicon atom can be used without particular limitation. Examples thereof include a silicone oil, a silicone rubber, and a silicone resin. The amount of the silicone-based flame retardant blended is appropriately selected depending on the type of the silicone-based flame retardant, the other component of the resin composition, and a desired degree of flame retardancy. For example, the silicone-based flame retardant is preferably blended in an amount of 0.05 to 20 parts by mass in 100 parts by mass of the resin composition in which the halogen free flame retardant, filler and other additives are all blended. When the silicone-based flame retardant is used, a molybdenum compound, alumina, or the like may be used in combination.

Examples of the inorganic flame retardant include a metal hydroxide, a metal oxide, a metal carbonate compound, a metal powder, a boron compound, and a low-melting-point glass.

Examples of the metal hydroxide include aluminum hydroxide, magnesium hydroxide, dolomite, hydrotalcite, calcium hydroxide, barium hydroxide, and zirconium hydroxide.

Examples of the metal oxide include zinc molybdate, molybdenum trioxide, zinc stannate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Examples of the metal carbonate compound include zinc carbonate, magnesium carbonate, calcium carbonate, barium carbonate, basic magnesium carbonate, aluminum carbonate, iron carbonate, cobalt carbonate, and titanium carbonate.

Examples of the metal powder include aluminum, iron, titanium, manganese, zinc, molybdenum, cobalt, bismuth, chromium, nickel, copper, tungsten, and tin.

Examples of the boron compound include zinc borate, zinc metaborate, barium metaborate, boric acid, and borax.

Examples of the low-melting-point glass include CEEPREE (Bokusui Brown Co., Ltd), hydrated glass SiO₂-MgO-H₂O, and PbO-B₂O₃-based, ZnO-P₂O₅-MgO-based, P₂O₅-B₂O₃-PbO-MgO-based, P-Sn-O-F-based, PbO-V₂O₅-TeO₂-based, Al₂O₃-H₂O-based, and lead borosilicate-based glass compounds.

The amount of the inorganic flame retardant blended is appropriately selected depending on the type of the inorganic flame retardant, the other component of the resin composition, and a desired degree of flame retardancy. For example, the inorganic flame retardant is preferably blended in an amount of 0.05 to 20 parts by mass, and particularly preferably 0.5 to 15 parts by mass, in 100 parts by mass of the resin composition in which the halogen free flame retardant, filler and other additives are all blended.

Examples of the organic metal salt-based flame retardant include ferrocene, an acetylacetonate metal complex, an organic metal carbonyl compound, an organic cobalt salt compound, an organic sulfonic acid metal salt, and a compound in which a metal atom is ionically bonded or coordinately bonded to an aromatic compound or a heterocyclic compound.

The amount of the organic metal salt-based flame retardant blended is appropriately selected depending on the type of the organic metal salt-based flame retardant, the other component of the resin composition, and a desired degree of flame retardancy. For example, the organic metal salt-based flame retardant is preferably blended in an amount of 0.005 to 10 parts by mass in 100 parts by mass of the resin composition in which the halogen free flame retardant, filler and other additives are all blended.

The curable resin composition of the present invention may contain a filler. Examples of the filler include inorganic and organic fillers. Examples of the inorganic filler include inorganic fine particles.

Examples of the inorganic fine particles that are excellent in heat resistance include alumina, magnesia, titania, zirconia, silica (quartz, fumed silica, precipitated silica, anhydrous silica, fused silica, crystalline silica, ultra-fine amorphous silica, etc.). Examples of the inorganic fine particles that are excellent in thermal conductivity include boron nitride, aluminum nitride, aluminum oxide, titanium oxide, magnesium oxide, zinc oxide, silicon oxide, and diamond. Examples of the inorganic fine particles that are excellent in electrical conductivity include metal fillers and/or metal-coated fillers using metals or alloys (e.g., iron, copper, magnesium, aluminum, gold, silver, platinum, zinc, manganese, stainless steel, etc.). Examples of the inorganic fine particles that are excellent in barrier properties include minerals such as mica, clay, kaolin, talc, zeolite, wollastonite, and smectite, potassium titanate, magnesium sulfate, sepiolite, zonolite, aluminum borate, calcium carbonate, titanium oxide, barium sulfate, zinc oxide, and magnesium hydroxide. Examples of the inorganic fine particles that have high refractive index include barium titanate, zirconia oxide, and titanium oxide. Examples of the inorganic fine particles that exhibit photocatalytic properties include photocatalytic metals such as titanium, cerium, zinc, copper, aluminum, tin, indium, phosphorus, carbon, sulfur, ruthenium, nickel, iron, cobalt, silver, molybdenum, strontium, chromium, barium, and lead, complexes of the metals, and oxides thereof. Examples of the inorganic fine particles that are excellent in abrasion resistance include metals such as silica, alumina, zirconia, and magnesium oxide, and complexes and oxides thereof. Examples of the inorganic fine particles that are excellent in electrical conductivity include metals such as silver and copper, tin oxide, and indium oxide. Examples of the inorganic fine particles that are excellent in insulating properties include silica. Examples of the inorganic fine particles that are excellent in shielding of ultraviolet light include titanium oxide and zinc oxide. These inorganic fine particles may be appropriately selected according to use application. The inorganic fine particles may be used alone, or a combination of a plurality of types thereof may be used. Since the inorganic fine particles have various properties other than the properties exemplified, the inorganic fine particles may be appropriately selected according to use application.

For example, when silica is used as the inorganic fine particles, publicly known silica fine particles such as powdered silica or colloidal silica can be used without particular limitation. Examples of commercially available powdered silica fine particles include AEROSIL 50 and 200 available from NIPPON AEROSIL CO., LTD., Sildex H31, H32, H51, H52, H121, and H122 available from Asahi Glass Co., Ltd., E220A and E220 available from Nippon Silica Industrial Co., Ltd., SYLYSIA470 available from FUJI SILYSIA CHEMICAL LTD., and SG flake available from Nippon Sheet Glass Co., Ltd.

Examples of commercially available colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, and ST-OL available from Nissan Chemical Corporation.

Surface-modified silica fine particles may be used. Examples thereof include those surface-treated with a reactive silane coupling agent having a hydrophobic group and those modified with a compound having a (meth)acryloyl group. Examples of commercially available powdered silica modified with a compound having a (meth)acryloyl group include AEROSIL RM50 and R711 available from NIPPON AEROSIL CO., LTD. Examples of commercially available colloidal silica modified with a compound having a (meth)acryloyl group include MIBK-SD available from Nissan Chemical Corporation.

The shape of the silica fine particles is not particularly limited. Spherical, hollow, porous, rodshaped, plate-shaped, fibrous, or amorphous silica fine particles can be used. The primary particle size is preferably in the range of 5 to 200 nm.

As titanium oxide fine particles, not only an extender pigment but also ultraviolet light-responsive photocatalyst can be used. For example, anatase-type titanium oxide, rutile-type titanium oxide, brookite-type titanium oxide, or the like can be used. In addition, particles that are designed to respond to visible light by doping a crystal structure of titanium oxide with a heterologous element can be used. As an element with which titanium oxide is doped, an anionic element such as nitrogen, sulfur, carbon, fluorine, or phosphorus, or a cationic element such as chromium, iron, cobalt, or manganese is suitably used. As the state of titanium oxide, a powder, or a sol or a slurry in which titanium oxide is dispersed in an organic solvent or water can be used. Examples of commercially available powdered titanium oxide fine particles include AEROSIL P-25 available from NIPPON AEROSIL CO., LTD., and ATM-100 available from TAYCA CORPORATION. Examples of commercially available titanium oxide fine particles in a slurry state include TKD-701 available from TAYCA CORPORATION.

The curable resin composition of the present invention may further contain a fibrous matrix. The fibrous matrix is not limited, but those used for fiber-reinforced resins are preferred, and examples include inorganic and organic fibers.

Examples of the inorganic fibers include inorganic fibers such as carbon fiber, glass fiber, boron fiber, alumina fiber, and silicon carbide fiber, as well as carbon fiber, activated carbon fiber, graphite fiber, tungsten carbide fiber, silicon carbide fiber, ceramic fiber, natural fiber, mineral fiber such as basalt, boron nitride fiber, boron carbide fiber, and metallic fiber. Examples of the metallic fiber include aluminum fiber, copper fiber, brass fiber, stainless steel fiber, and steel fiber.

Examples of the organic fibers include synthetic fibers made of resin materials such as polybenzazole, aramid, PBO (polyparaphenylenebenzoxazole), polyphenylene sulfide, polyester, acrylic, polyamide, polyolefin, polyvinyl alcohol, and polyarylate, natural fibers such as cellulose, pulp, cotton, wool, and silk, and regenerated fibers such as protein, polypeptide, and alginic acid.

Among these, carbon fiber and glass fiber are preferred because of their wide range of industrial applications. Only one of these types may be used, or multiple types may be used simultaneously.

The fibrous matrix may be an aggregate of fibers, and the fibers may be continuous or discontinuous, and may be woven or non-woven. The fibrous matrix may be a fiber bundle in which fibers are aligned in one direction, or a sheet of fiber bundles. The fibrous matrix may have a three-dimensional shape in which the aggregate of fibers has a thickness.

In order to adjust the solid content and the viscosity of the resin composition, a dispersion medium may be used in the curable resin composition of the present invention. The dispersion medium is not limited as long as it is a liquid dispersion medium that does not impair the effects of the present invention. Examples thereof include various organic solvents and liquid organic polymers.

Examples of the organic solvent include ketones such as acetone, methyl ethyl ketone (MEK), and methyl isobutyl ketone (MIBK), cyclic ethers such as tetrahydrofuran (THF) and dioxolane, esters such as methyl acetate, ethyl acetate, and butyl acetate, aromatic compounds such as toluene and xylene, alcohols such as carbitol, cellosolve, methanol, isopropanol, butanol, and propylene glycol monomethyl ether. The organic solvents may be used alone or in combination. Among these, methyl ethyl ketone is preferred in terms of volatility during coating and solvent recovery.

The liquid organic polymer is a liquid organic polymer that does not contribute directly to a curing reaction. Examples thereof include an acrylic polymer (FLOWLEN WK-20: Kyoeisha Chemical Co., Ltd.), an amine salt of specialized modified phosphate (HIPLAAD ED-251: Kusumoto Chemicals, Ltd.), and a modified acrylic block copolymer (DISPERBYK2000: BYK).

The resin composition of the present invention may contain other additives. Examples include catalyst, polymerization initiator, inorganic pigment, organic pigment, extender pigment, clay mineral, wax, surfactant, stabilizer, flowing adjuster, coupling agent, dye, leveling agent, rheology control agent, UV absorber, antioxidant, flame retardant, plasticizer, and reactive diluent.

The resin composition of the present invention may be cured to obtain a cured article. The curing can be performed at normal temperature or by heating. When thermal curing is performed, the resin composition may be cured in a single heating step or may be cured through a multi-step heating process.

The curable resin composition of the present invention can be cured with active energy rays. In this case, a photo-cationic polymerization initiator may be used as a polymerization initiator. Visible light, ultraviolet rays, X-rays, electron beams, and the like can be used as the active energy rays.

Examples of the photo-cationic polymerization initiator that can be used include aryl-sulfonium salts and aryliodonium salts. Specific examples include arylsulfonium hexafluorophosphate, arylsulfonium hexafluoroanthimonate, arylsulfonium tetrakis(pentafluoro)borate salt, and tri(alkylphenyl)sulfonium hexafluorophosphate. The photo-cationic polymerization initiator may be used alone, or two or more types thereof may be used in combination.

The curable resin composition of the present invention is obtained by uniformly mixing the components described above, and the mixing method is not limited. For example, the curable resin composition of the present invention can be prepared by uniformly mixing using a pot mill, a ball mill, a bead mill, a roll mill, a homogenizer, a super mill, a homo disper, a utility mixer, a Banbury mixer, a kneader, or the like.

The curable resin composition of the present invention is prepared by dissolving the curable compound described above, the compound (III) reactive with the curable compound, and, if necessary, the curing agent, filler, fibrous matrix, dispersion medium, and resins other than the various compounds described above in the dispersion medium such as an organic solvent described above. After dissolution, the solvent is distilled off and the curable resin composition can be obtained by drying under reduced pressure in a vacuum oven or the like. The curable resin composition of the present invention may be a homogeneous mixture of the above constituent materials. In this case, it is preferable to mix the constituent materials uniformly in a mixer or the like. The ratio of each constituent material blended can be adjusted as appropriate according to desired properties such as mechanical strength, heat resistance, repairability, and remoldability of the cured article. In preparation of the curable resin composition, the order of mixing specific constituent materials is not particularly limited.

The cured article of the present invention is made by curing the curable resin composition of the present invention. As a curing method, a known method can be selected and employed as appropriate depending on the properties of the composition to be used.

The cured article of the present invention can maintain good mechanical strength by expressing moderate crosslink density as described above. When the cured article of the present invention is subjected to mechanical energy, such as scratches or external force, the reversible bond is broken, thereby expressing ease of disassembly. Furthermore, since equilibrium shifts in the bonding direction, an adduct is formed again, which enables damage repair and remolding.

The structure of the resulting cured article can be determined by infrared absorption (IR) spectroscopy using Fourier transform infrared spectroscopy (FT-IR) or the like, elemental analysis, X-ray scattering, or the like.

The curable resin composition of the present invention and the cured article produced from the curable resin composition are excellent in both ease of disassembly and repairability and have remoldability, and are useful for the following applications.

The curable resin cured article of the present invention can be laminated with a substrate to form a laminated product. As the substrate of the laminated product, an inorganic material such as metal or glass, an organic material such as plastic or wood, or the like can be used as appropriate depending on the application. The substrate can be in the form of a laminate, or may be a flat plate, a sheet, or may have a three-dimensional structure, or may have a three-dimensional shape. The substrate may be of any shape according to the purpose, for example, a shape having curvature on all or part of the surface. The hardness, thickness, and the like of the substrate are not limited. The substrate may be a multilayer laminate including a first substrate, a layer of the cured article of the curable resin composition of the present invention, and a second substrate in sequence. Since the curable resin composition of the present embodiment has excellent adhesiveness, it can be suitably used as an adhesive to bond the first substrate and the second substrate. The curable resin cured article of the present invention may be used as a substrate with which the cured article of the present invention may be further laminated product.

In addition, the curable resin cured article of the present invention is particularly suitable for adhesion between different kinds of materials because of its ability to relax stress. For example, even in a laminate of different types of materials, such as a substrate of metal and/or metal oxide and a second substrate of a plastic layer, the adhesive strength is maintained due to the stress relaxation ability of the cured article of the present invention.

In the laminate made by laminating the cured article of the present invention and the substrate, a layer containing the cured article may be formed by applying or molding directly onto the substrate, or a layer already molded may be laminated. In the case of directly applying, examples of the applying method include, but are not particularly limited, a spraying method, a spin coating method, a dip method, a roll-coating method, a blade coating method, a doctor roll method, a doctor blade method, a curtain coating method, a slit coating method, a screen printing method, and an inkjet method. In the case of directly molding, examples include in-mold molding, insert molding, vacuum molding, extrusion laminate molding, and press molding. When laminating the molded composition, an uncured or semi-cured composition layer may be laminated and then cured, or a layer containing a cured article in which the composition is fully cured may be laminated on the substrate. A precursor that can be a substrate may be applied to the cured article of the present invention and cured to form a laminate, or a precursor that can be a substrate or the composition of the present invention may be bonded in an uncured or semi-cured state and then cured. The precursor that can be a substrate is not limited, and examples include various curable resin compositions.

The cured article obtained using the curable resin composition of the present invention has particularly high adhesiveness to metals and/or metal oxides and can be used particularly well as a primer for metals. Examples of the metals include copper, aluminum, gold, silver, iron, platinum, chromium, nickel, tin, titanium, zinc, various alloys, and composite materials of these metals. Examples of the metal oxides include oxides and/or composite oxides of these metals. In particular, the cured article of the present invention has excellent adhesive strength to iron, copper, and aluminum, and can be used well as an adhesive for iron, copper, and aluminum.

The curable resin composition of the present invention can be suitably used as an adhesive for a structural member in the fields of automobiles, electric trains, civil engineering and construction, electronics, airplanes, and aerospace industry. For example, even when the adhesive is used in adhesion between different materials such as a metal and a non-metal, high adhesiveness can be maintained without being affected by a change in temperature environment, and peeling is unlikely to occur. The adhesive can be used as an adhesive for general office use, a medical adhesive, an adhesive for carbon fibers, or an adhesive for battery cell modules or cases, in addition to the adhesive for a structural member. The adhesive can be used as an adhesive for bonding of an optical component, an adhesive for bonding of an optical disk, an adhesive for mounting of a printed wiring board, a die bonding adhesive, an adhesive for semiconductor such as an underfill material, and an adhesive for mounting such as an underfill material for BGA reinforcement, an anisotropic conductive film, and an anisotropic conductive paste.

When the curable resin composition of the present invention has a fibrous matrix and the fibrous matrix is a reinforcing fiber, the curable resin composition containing the fibrous matrix can be used as a fiber-reinforced resin. The fibrous matrix can be included in the composition by any method as long as the effects of the present invention are not impaired. For example, the fibrous matrix and the composition are composited by a method such as kneading, coating, impregnation, injection, or pressure bonding. The method can be selected as appropriate depending on the form of fibers and the application of the fiber reinforced resin.

The fiber-reinforced resin may be molded by any method. When a plate-shaped product is produced, extrusion molding is common but flat pressing may be employed. In addition, extrusion molding, blow molding, compression molding, vacuum molding, injection molding, or the like can be used. When a film-shaped product is produced, melt extrusion as well as solution casting can be used. When melt molding is used, examples include film blown extrusion, casting, extrusion lamination, calendering, sheet molding, fiber molding, blow molding, injection molding, rotational molding, and coating molding. In the case of a resin that is cured with active energy rays, the cured article can be produced using various curing methods using active energy rays. In particular, when a thermosetting resin is used as the main component of a matrix resin, exemplary molding methods include a method in which a molding material pre-impregnated is pressed and heated by a press or an autoclave, as well as resin transfer molding (RTM), vacuum assist resin transfer molding (VaRTM), laminate molding, and hand layup molding.

The cured article of the curable resin composition of the present invention has good heat resistance and good repairability, and has remoldability, and thus can be used as a molding material for large cases, motor housings, castmolded materials inside cases, gears and pulleys, and the like. These may be cured articles of the resin alone or may be cured articles reinforced with fibers such as glass chips.

The fiber-reinforced resin can form a state called uncured or semi-cured prepreg. After a product in a prepreg state is distributed, final curing may be performed to form a cured article. When a laminate is formed, it is preferable to form a prepreg and then laminate other layers before final curing to form a laminate in which each layer adheres to each other. The mass ratio of the composition and the fibrous matrix used in this case is not particularly limited. It is preferable that the prepreg be prepared such that the ratio of the resin in the prepreg is generally 20 to 60% by mass.

The cured article of the present invention has good heat resistance and good repairability, and has remoldability, and can be used as a heat resistant material and electronic material. In particular, the cured article of the present invention is suitable for semiconductor sealing materials, circuit boards, build-up films, and build-up substrates, as well as adhesives and resist materials. It is also suitable for a matrix resin for fiber-reinforced resins, and is particularly suitable as a prepreg with high heat resistance. Heat-resistant members and electronic members thus obtained can be suitably used in various applications. Examples of the applications include, but are not limited to, industrial machine parts, general machine parts, parts for automobiles, railroads, vehicles, and the like, space and aviation-related parts, electronic and electrical parts, construction materials, containers and packaging members, household goods, sports and leisure goods, and housing parts for wind power generation.

In particular, the cured article can be suitably used as an adhesive for a structural member in the fields of automobiles, electric trains, civil engineering and construction, electronics, airplanes, and aerospace industry by using characteristics including excellent flexibility of the cured article. For example, even when an adhesive of the present invention is used in adhesion between different materials such as a metal and a non-metal, high adhesiveness can be maintained without being affected by a change in temperature environment, and peeling is unlikely to occur. The adhesive of the present invention can be used as an adhesive for general office use, a medical adhesive, an adhesive for carbon fibers, or an adhesive for battery cells, modules, and cases, in addition to the adhesive for a structural member. Examples of the adhesive include an adhesive for bonding of an optical component, an adhesive for bonding of an optical disk, an adhesive for mounting of a printed wiring board, a die bonding adhesive, an adhesive for semiconductor such as an underfill material, and an adhesive for mounting such as an underfill material for BGA reinforcement, an anisotropic conductive film, and an anisotropic conductive paste.

Examples of typical products will be described below.

### 1. Semiconductor Sealing Material

Examples of a method for preparing a semiconductor sealing material from the resin composition of the present invention include a method in which the resin composition, and a compounding agent such as the curing accelerator and the inorganic filler are sufficiently melt-mixed using an extruder, a kneader, a roll, or the like, if necessary, until the components are homogeneous. In this case, as the inorganic filler, molten silica is generally used. When the molten silica is used as a high thermal conductive semiconductor sealing material for a power transistor or a power IC, filling of crystalline silica, alumina, or silicon nitride having higher thermal conductivity than molten silica may be increased, or molten silica, crystalline silica, alumina, silicon nitride, or the like may be used. The inorganic filler is used preferably at a filling rate of 30 to 95% by mass, and in terms of improving flame retardancy, moisture resistance, and resistance to solder cracking, and decreasing a linear expansion coefficient, more preferably 70 parts by mass or more, and even more preferably 80 parts by mass or more, relative to 100 parts by mass of the curable resin composition.

### 2. Semiconductor Device

Examples of semiconductor packaging for preparing a semiconductor device from the curable resin composition of the present invention include a method in which the semiconductor sealing material is cast or molded with a transfer molding machine, an injection molding machine, or the like and then heated at 50 to 250°C for 2 to 10 hours.

### 3. Printed Circuit Board

Examples of a method for preparing a printed circuit board from the composition of the present invention include a method in which the prepreg is layered by an ordinary method, copper foil is appropriately overlaid, and they are thermally compression-bonded under a pressure of 1 to 10 MPa at 170 to 300°C for 10 minutes to 3 hours.

### 4. Flexible Substrate

Examples of a method for producing a flexible substrate from the crosslinkable resin composition of the present invention include a production method including three steps described below. A first step is a step of applying a crosslinkable resin composition containing a resin component, an organic solvent, and the like to an electrically insulating film using a coater such as a reverse roll coater, or a comma coater; a second step is a step of heating the electrically insulating film having the applied crosslinkable resin composition at 60 to 170°C for 1 to 15 minutes using a heater and volatilizing the solvent from the electrically insulating film, to obtain the crosslinkable resin composition in a B-stage state; and a third step is a step of thermocompression-bonding the electrically insulating film having the crosslinkable resin composition in the B-stage state with metal foil through an adhesive using a heating roll or the like (a thermocompression-bonding pressure is preferably 2 to 200 N/cm, and a thermocompression-bonding temperature is preferably 40 to 200°C). If sufficient adhesion performance is achieved through the three steps, the operation may be completed. If complete adhesion performance is required, post-curing under conditions of 100 to 200°C and 1 to 24 hours is preferably further performed. The thickness of a finally cured layer of the resin composition is preferably within the range of 5 to 100 µm.

### 5. Build-Up Substrate

A method for preparing a build-up substrate from the composition of the present invention includes, for example, the following steps. First, the above composition containing a rubber, a filler, and the like as appropriate is applied to a circuit board having circuitry using spray coating, curtain coating, or the like and then cured (step 1). Then, after drilling the circuit board to form a predetermined through hole section as required, the circuit board is treated with a roughening agent, and the surface is washed with hot water to form irregularities and then plated with a metal such as copper (step 2). These operations are repeated sequentially as desired so that a resin insulating layer and a conductor layer with a predetermined circuit pattern are alternately built up (step 3). The drilling for the through hole section is performed after formation of an outermost resin insulating layer. The build-up substrate of the present invention can also be produced by thermally compression-bonding a copper foil with a resin that is obtained by semi-curing the resin composition on the copper foil on a wiring substrate having a circuit at 170 to 300°C without forming a roughened surface and a plating treatment.

### 6. Build-Up Film

As a method for preparing a build-up film from the composition of the present invention, the composition is applied to a surface of a support film (Y) as a substrate, and an organic solvent is dried by heating, blowing hot air, or the like, to form a composition layer (X).

Preferred examples of the organic solvent used herein include ketones such as acetone, methyl ethyl ketone, and cyclohexanone; acetic esters such as ethyl acetate, butyl acetate, cellosolve acetate, propylene glycol monomethyl ether acetate, and carbitol acetate; carbitols such as cellosolve and butyl carbitol; aromatic hydrocarbons such as toluene and xylene, dimethylformamide, dimethylacetamide, and N-methylpyrrolidone. The organic solvent is preferably used at such a ratio that the nonvolatile content is 30 to 60% by mass.

In general, the thickness of the formed layer (X) is equal to or more than the thickness of the conductor layer. Since the thickness of the conductor layer in the circuit board is generally within the range of 5 to 70 µm, the thickness of the resin composition layer is preferably within the range of 10 to 100 µm. The composition layer (X) in the present invention may be protected by a protective film described below. Protection by the protective film can prevent a surface of the resin composition layer from suffering attachment of contaminants or the like or from being scratched.

Examples of the support film and the protective film include polyolefins such as a polyethylene, a polypropylene, and a polyvinyl chloride, polyesters such as a polyethylene terephthalate (hereinafter also referred to as "PET") and a polyethylene naphthalate, polycarbonates, polyimides, a release paper, and metal foils such as a copper foil and an aluminum foil. The support film and the protective film may be subjected to matting and corona treatment as well as releasing treatment. The thickness of the support film is not particularly limited, and the support film generally having a thickness of the range of 10 to 150 µm, and preferably 25 to 50 µm is used. The thickness of the protective film is preferably 1 to 40 µm.

The support film (Y) is peeled after lamination on the circuit board or formation of an insulating layer by heating and curing. When the curable resin composition layer that constitutes the build-up film is heated and cured and the support film (Y) is then peeled, attachment of contaminants or the like at a curing step can be prevented. When the support film is peeled after curing, the support film is generally subjected to a releasing treatment in advance.

A multilayered printed wiring board can also be produced by using the build-up film obtained as described above. For example, if the layer (X) is protected by the protective film, the layer (X) and the protective film are peeled, and then the layer (X) is laminated directly in contact with a surface or both surfaces of the circuit board, for example, by a vacuum lamination method. The lamination method may be in a batch mode or a continuous mode with rolls. Before lamination, the build-up film and the circuit board may be heated (preheated), if necessary. The lamination is preferably performed under a lamination condition of a compression-bonding temperature (lamination temperature) of 70 to 140°C, a compression-bonding pressure of 1 to 11 kgf/cm2 (9.8×10⁴ to 107.9×10⁴ N/m²), and a reduced pressure of air pressure of 20 mm Hg (26.7 hPa) or less.

### 7. Conductive paste

Examples of a method for preparing conductive paste from the composition of the present invention include a method in which conductive particles are dispersed in the composition. The conductive paste can be a paste resin composition for circuit connection or an anisotropic conductive adhesive, depending on the type of conductive particles used.

### Examples

The present invention will now be specifically described using examples and comparative examples. Unless otherwise specified, "part(s)" and "%" in the following description are based on mass. The present invention is not limited to these examples.

FD-MS spectra and GPC were measured under the following conditions.
FD-MS: "JMS-T100GC AccuTOF" from JEOL Ltd.
Measurement range: m/z = 50.00 to 2000.00
Change rate: 25.6 mA/min
Final electric current: 40 mA
Cathode voltage: -10 kV
GPC: "HLC-8320GPC" from Tosoh Corporation
Columns: "TSK-GEL G2000HXL" + "TSK-GEL G3000HXL" + "TSK-GEL G4000HXL" from Tosoh Corporation
Detector: RI (differential refractometer)
Measuring conditions: 40°C
Mobile phase: tetrahydrofuran
Flow rate: 1 ml/min
Standard: "PStQuick A", "PStQuick B", "PStQuick E", "PStQuick F" from Tosoh Corporation

The epoxy equivalent weight of the synthesized epoxy resin was measured in accordance with JIS K7236, and the epoxy equivalent weight (g/eq) was calculated.

Examples of the method for calculating the number of repeating units include GPC molecular weight measurement or calculation from the results of various appropriate instrumental analyses such as FD-MS.

### Example 1

In a flask equipped with a thermometer and a stirrer, 445 g (0.5 mol) of a diglycidyl ether of polytetramethylene glycol ("DENACOL EX-991L" from Nagase ChemteX: epoxy equivalent 445 g/eq) and 64.4 g (0.33 mol) of 2-aminoanthracene (active hydrogen equivalent 96.6 g/eq) were charged. After the temperature was raised to 130°C for 2 hours, a reaction was allowed to proceed for 20 hours. Then, 509.4 g of an epoxy resin (Ep-1) was obtained. The obtained epoxy resin (Ep-1) had an epoxy equivalent weight of 1343 g/eq. The epoxy resin (Ep-1) was confirmed to contain the target epoxy resin (Ep-1) because the mass spectrum showed a peak of M+ = 1607 corresponding to the theoretical structure of m = 1 and n = 8 in the following structural formula (Ep-1).

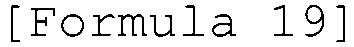

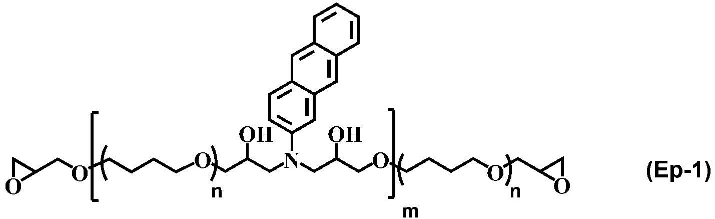

### Example 2

509.4 g (0.19 mol) of the epoxy resin (Ep-1) obtained in Example 1 and 40 g (0.38 mol) of diethanolamine were charged. After the temperature was raised to 80°C for 1 hour, a reaction was allowed to proceed for 11 hours. Then, 549.4 g of a hydroxy compound (Ph-1) was obtained. The hydroxy compound (Ph-1) was confirmed to contain the target hydroxy compound (Ph-1) because the mass spectrum showed a peak of M+ = 1817 corresponding to the theoretical structure of m = 1 and n = 8 in the following structural formula (Ph-1).

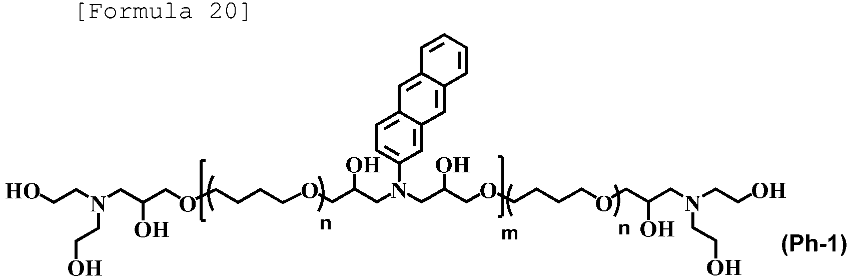

### Example 3

In a flask equipped with a thermometer and a stirrer, 203 g (0.5 mol) of a diglycidyl ether of 1,12-dodecanediol (available from Yokkaichi Chemical Company Limited: epoxy equivalent 203 g/eq) and 92 g (0.48 mol) of 2-aminoanthracene (active hydrogen equivalent 96.6 g/eq) were charged. After the temperature was raised to 125°C for 2 hours, a reaction was allowed to proceed for 14 hours. Then, 287 g of an epoxy resin (Ep-2) was obtained. The obtained epoxy resin (Ep-2) had an epoxy equivalent weight of 4142 g/eq. The epoxy resin (Ep-2) was confirmed to contain the target epoxy resin (Ep-2) because the mass spectrum showed a peak of M+ = 822 corresponding to the theoretical structure of n = 1 in the following structural formula (Ep-2).

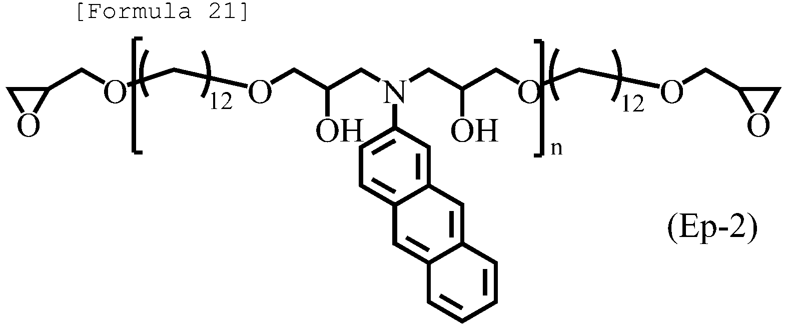

### Example 4

In a flask equipped with a thermometer and a stirrer, 188 g (0.5 mol) of EPICLON 850S (bisphenol liquid epoxy resin from DIC Corporation, epoxy equivalent 188 g/eq) and 48.3 g (0.25 mol) of 2-aminoanthracene (active hydrogen equivalent 96.6 g/eq) were charged. After the temperature was raised to 125°C for 2 hours, a reaction was allowed to proceed for 14 hours. Then, 225 g of an epoxy resin (Ep-3) was obtained. The obtained epoxy resin (Ep-3) had an epoxy equivalent weight of 510 g/eq. The epoxy resin (Ep-3) was confirmed to contain the target epoxy compound (Ep-3) because the mass spectrum showed a peak of M+ = 874 corresponding to the theoretical structure of n = 1 in the following structural formula (Ep-3).

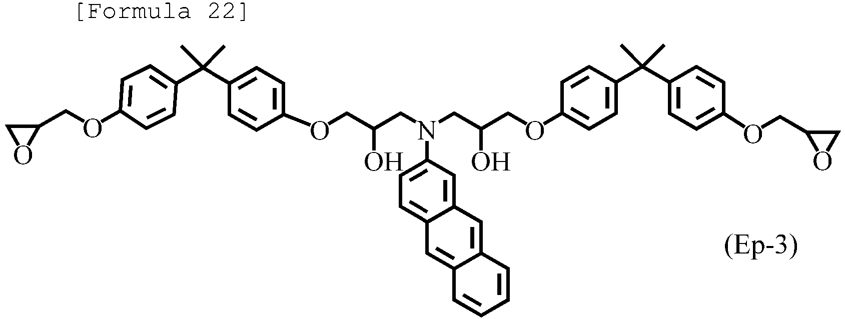

### Example 5

In a flask equipped with a thermometer, a condenser, and a stirrer, 40.0 g (0.10 mol) of a diglycidyl ether of 1,12-dodecanediol (available from Yokkaichi Chemical Company Limited: epoxy equivalent 200 g/eq) and 25.1 g (0.066 mol) of 9-(4-hydroxybenzyl)-10-(4-hydroxyphenyl)anthracene (BIP-ANT from ASAHI YUKIZAI CORPORATION) were charged. After the temperature was raised to 140°C for 30 minutes, 0.33 g of 4% sodium hydroxide solution was charged. The temperature was then raised to 150°C for 30 minutes, and a reaction was allowed to further proceed at 150°C for 20 hours. The resulting product was then cooled to 80°C, and 65 g of methyl isobutyl ketone, 65 g of water, and a neutralizing amount of sodium phosphate were added to remove the water layer. Subsequently, the solvent was removed under reduced pressure to obtain 60.3 g of an epoxy resin (Ep-4). The obtained epoxy resin (Ep-4) had an epoxy equivalent weight of 1030 g/eq. The epoxy resin (Ep-4) was confirmed to contain the target epoxy resin (Ep-4) because the mass spectrum showed a peak of M+ = 1005 corresponding to the theoretical structure of m = 1 in the following structural formula (A-1).

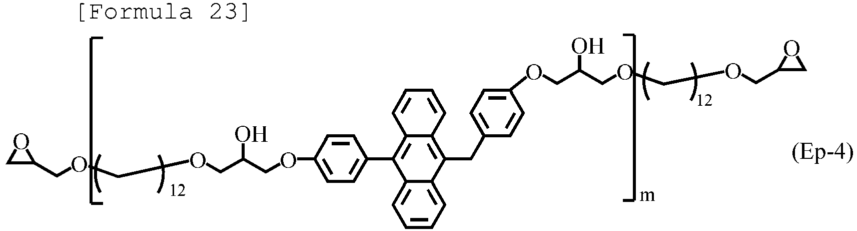

### Example 6

A reaction was carried out in the same manner as in Example 5 except that 40.0 g (0.10 mol) of the diglycidyl ether of 1,12-dodecanediol in Example 5 was replaced with 89.0 g (0.10 mol) of a diglycidyl ether of polytetramethylene glycol ("DENACOL EX-991L" from Nagase ChemteX: epoxy equivalent 445 g/eq) to obtain 125.5 g of an epoxy resin (Ep-5). The obtained epoxy resin (Ep-5) had an epoxy equivalent weight of 1970 g/eq. The epoxy resin (Ep-5) was confirmed to contain the target epoxy resin (Ep-5) because the mass spectrum showed a peak of M+ = 2223 corresponding to the theoretical structure of m = 1 and n = 11 in the following structural formula (Ep-5).

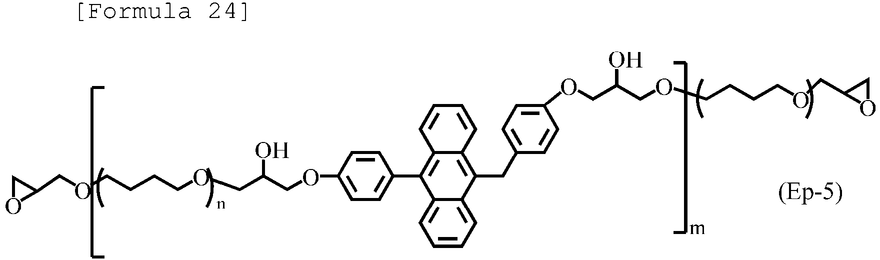

### Example 7

41.2 g (0.02 mol) of the epoxy resin (Ep-4) (epoxy equivalent 1030g/eq) obtained in Example 5 and 4.8 g (0.021 mol) of bisphenol A (hydroxyl equivalent 114 g/eq) were charged. After the temperature was raised to 140°C for 30 minutes, 0.5 g of 20% sodium hydroxide solution was charged. The temperature was then raised to 150°C for 30 minutes, and a reaction was allowed to further proceed at 150°C for 16 hours. The resulting product was then cooled to 80°C, and 45 g of methyl isobutyl ketone, 45 g of water, and a neutralizing amount of sodium phosphate were added to remove the water layer. Subsequently, the solvent was removed under reduced pressure, and a neutralizing amount of sodium phosphate was added to obtain 43.1 g of a hydroxy compound (Ph-2). The obtained hydroxy compound (Ph-2) had a hydroxyl equivalent weight of 12840 g/eq as calculated from GPC. The hydroxy compound (Ph-2) was confirmed to contain the target hydroxy compound (Ph-2) because the mass spectrum showed a peak of M+ = 1461 corresponding to the theoretical structure of m = 1 in the following structural formula (A-3).

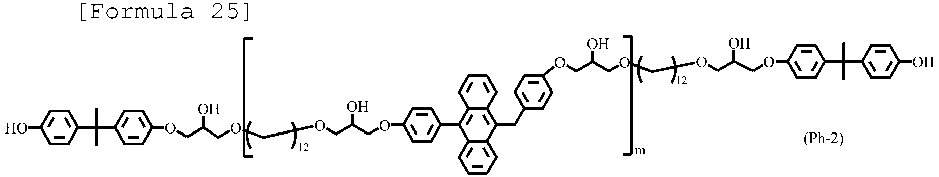

### Example 8

In a flask equipped with a thermometer, a condenser, and a stirrer, 445 g (0.5 mol) of a diglycidyl ether of polytetramethylene glycol ("DENACOL EX-991L" from Nagase ChemteX: epoxy equivalent 445 g/eq) and 69.3 g (0.33 mol) of 2,6-dihydroxyanthracene (hydroxyl equivalent 105 g/eq) were charged. After the temperature was raised to 140°C for 30 minutes, 2.6 g of 4% sodium hydroxide solution was charged. The temperature was then raised to 150°C for 30 minutes, and a reaction was allowed to further proceed at 150°C for 6 hours. A neutralizing amount of sodium phosphate was then added to obtain 491 g of an epoxy resin (Ep-6). The obtained epoxy resin (Ep-6) had an epoxy equivalent weight of 1700 g/eq. The epoxy resin (Ep-6) was confirmed to contain the target epoxy resin (Ep-6) because the mass spectrum showed a peak of M+ = 2754 corresponding to the theoretical structure of m = 1 and n = 8 in the following structural formula (Ep-6).

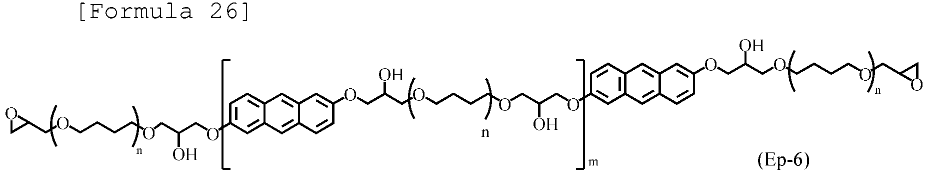

### Example 9

In a flask equipped with a thermometer, a condenser, and a stirrer, 200 g (0.5 mol) of a diglycidyl ether of 1,12-dodecanediol (available from Yokkaichi Chemical Company Limited: epoxy equivalent 200 g/eq) and 69.3 g (0.33 mol) of 2,6-dihydroxyanthracene (hydroxyl equivalent 105 g/eq) were charged. After the temperature was raised to 140°C for 30 minutes, 2.6 g of 4% sodium hydroxide solution was charged. The temperature was then raised to 150°C for 30 minutes, and a reaction was allowed to further proceed at 150°C for 6 hours. A neutralizing amount of sodium phosphate was then added to obtain 255 g of an epoxy resin (Ep-7). The obtained epoxy resin (Ep-7) had an epoxy equivalent weight of 1440 g/eq. The epoxy resin (Ep-7) was confirmed to contain the target epoxy resin (Ep-7) because the mass spectrum showed a peak of M+ = 838 corresponding to the theoretical structure of m = 1 in the following structural formula (Ep-7).

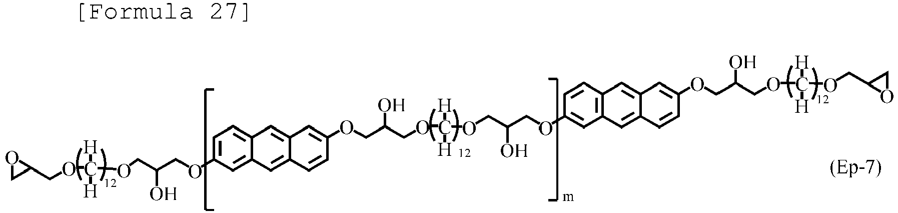

### Example 10

89 g (0.05 mol) of the epoxy resin (Ep-7) obtained in Example 9 and 12.0 g (0.053 mol) of bisphenol A (hydroxyl equivalent 114 g/eq) were charged. After the temperature was raised to 140°C for 30 minutes, 1.0 g of 20% sodium hydroxide solution was charged. The temperature was then raised to 150°C for 30 minutes, and a reaction was allowed to further proceed at 150°C for 12 hours. A neutralizing amount of sodium phosphate was then added to obtain 95 g of a hydroxy compound (Ph-3). The obtained hydroxy compound (Ph-3) had a hydroxyl equivalent weight of 19200 g/eq as calculated from GPC. The hydroxy compound (Ph-3) was confirmed to contain the target hydroxy compound (Ph-3) because the mass spectrum showed a peak of M+ = 1294 corresponding to the theoretical structure of m = 1 in the following structural formula (Ph-3).

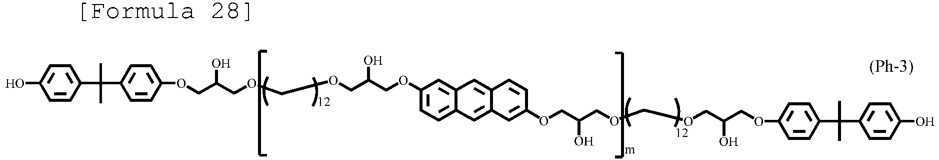

### Synthesis Example 1

In a flask equipped with a thermometer, a condenser, and a stirrer, 56.4 g (0.15 mol) of 9-(4-hydroxybenzyl)-10-(4-hydroxyphenyl)anthracene (BIP-ANT from ASAHI YUKIZAI CORPORATION), 56.4 g of methanol, and 222.0 g (2.4 mol) of epichlorohydrin were added. After dissolving at 60°C, 25.0 g (0.30 mol) of 48% caustic soda was added dropwise from a dropping funnel over 30 minutes, and a reaction was carried out at 60°C for 9 hours. Subsequently, the resulting product was washed with 114 g of pure water four times, and then the organic layer was concentrated under reduced pressure to obtain a target resinous product. The resinous product left to cool was coarsely crushed in a mortar and stirred with 540 g of methanol to precipitate crystals, which were filtered and dried to obtain 67.7 g of an epoxy resin (Ep-8). The obtained epoxy resin (Ep-8) had an epoxy equivalent weight of 248 g/eq.

### Example 11 Hydroxy Compound (Ph-4)

49.6 g (0.1 mol) of the epoxy resin (Ep-8) obtained in Synthesis Example 1 and 58.4 g (0.2 mol) of triphenylolmethane ("TPM-100" from Gun Ei Chemical Industry Co., Ltd., hydroxyl equivalent 97 g/eq) were charged. After the temperature was raised to 140°C for 30 minutes, 1.0 g of 20% sodium hydroxide solution was charged. The temperature was then raised to 150°C for 30 minutes, and a reaction was allowed to further proceed at 150°C for 12 hours. A neutralizing amount of sodium phosphate was then added to obtain 105 g of a hydroxy compound (Ph-4). The obtained hydroxy compound (Ph-4) had a hydroxyl equivalent weight of 300 g/eq as calculated from GPC.

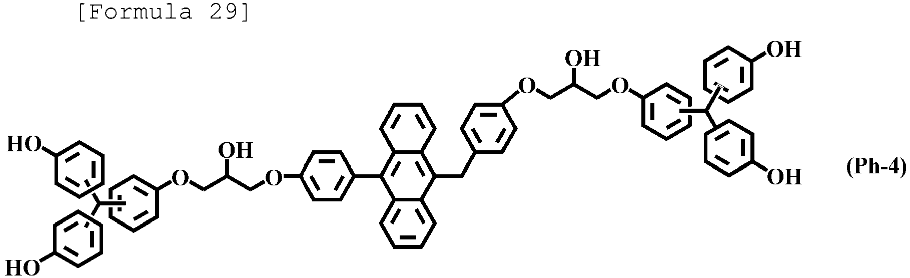

### Example 12

In a flask equipped with a thermometer, a dropping funnel, a condenser, and a stirrer, 100 g of the hydroxy compound (Ph-4) obtained in Synthesis Example 11, 215 g (2.3 mol) of epichlorohydrin, and 65 g of n-butanol were added and allowed to dissolve under nitrogen gas purge. The temperature was raised to 65°C, and the pressure was reduced to a pressure in which azeotropy occurred. 35.4g (0.43 mol) of 49% sodium hydroxide solution was added dropwise over 5 hours.

Subsequently, stirring was continued under the same condition for 0.5 hour. During the reaction, the distillate that was distilled out by azeotropy was separated with a Dean Stark trap, and a water layer was removed while an oil layer was returned to the reaction system. The unreacted epichlorohydrin was then removed by vacuum distillation. To the resultant crude epoxy resin, 90 g of methyl isobutyl ketone and 90 g of n-butanol were added and allowed to dissolve.

To this solution, 10 g of 10% sodium hydroxide solution was added, and a reaction was allowed to proceed at 80°C for 2 hours. The resultant was then washed with 60 g of water three times until the pH of the washing liquid was neutral.

Subsequently, the system was dehydrated by azeotropy, microfiltration was performed, and the solvent was removed under reduced pressure to obtain 113 g of an epoxy resin (Ep-9). The obtained epoxy resin (Ep-9) had an epoxy equivalent weight of 356 g/eq.

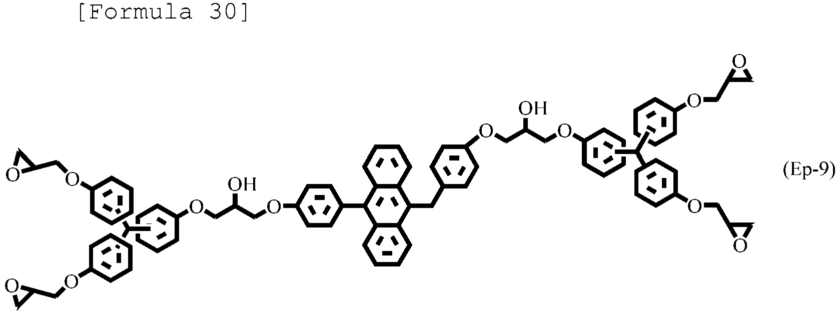

### Synthesis Example 2

In a flask equipped with a thermometer and a stirrer, 445 g (0.5 mol) of a diglycidyl ether of polytetramethylene glycol ("DENACOL EX-991L" from Nagase ChemteX: epoxy equivalent 445 g/eq) and 171 g (0.75 mol) of bisphenol A (hydroxyl equivalent 114 g/eq) were charged. After the temperature was raised to 140°C for 30 minutes, 3.1 g of 4% sodium hydroxide solution was charged. The temperature was then raised to 150°C for 30 minutes, and a reaction was allowed to further proceed at 150°C for 16 hours. A neutralizing amount of sodium phosphate was then added to obtain 616 g of a hydroxy compound represented by the following formula (Ph-2). The hydroxy compound was confirmed to contain a PTMG (polytetramethylene glycol)-type (BPA: bisphenol A) hydroxy compound because the mass spectrum showed a peak of M+ = 1380 corresponding to the theoretical structure of m1 = 1 and n1 = 11 in the following structural formula. The hydroxy compound (Ph-5) had a hydroxyl equivalent weight of 1080 g/eq as calculated from GPC, the average number of n1 was 10.6, and the average number of m1 was 0.76.

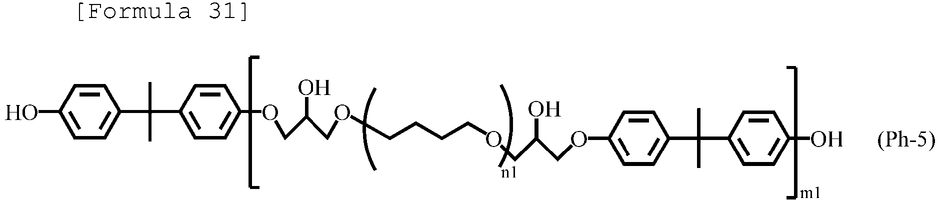

### Synthesis Example 3

In a flask equipped with a thermometer, a dropping funnel, a condenser, and a stirrer, 200 g of the hydroxy compound Ph-5 obtained in Synthesis Example 2, 437 g (4.72 mol) of epichlorohydrin, and 118 g of n-butanol were added and allowed to dissolve under nitrogen gas purge. The temperature was raised to 65°C, and the pressure was reduced to a pressure in which azeotropy occurred. 6.66 g (0.08 mol) of 49% sodium hydroxide solution was added dropwise over 5 hours.

Subsequently, stirring was continued under the same condition for 0.5 hour. During the reaction, the distillate that was distilled out by azeotropy was separated with a Dean Stark trap, and a water layer was removed while an oil layer was returned to the reaction system. The unreacted epichlorohydrin was then removed by vacuum distillation. To the resultant crude epoxy resin, 150 g of methyl isobutyl ketone and 150 g of n-butanol were added and allowed to dissolve.

To this solution, 10 g of 10% sodium hydroxide solution was added, and a reaction was allowed to proceed at 80°C for 2 hours. The resultant was then washed with 50 g of water three times until the pH of the washing liquid was neutral.

Subsequently, the system was dehydrated by azeotropy, microfiltration was performed, and the solvent was removed under reduced pressure to obtain 190 g of an epoxy resin (Ep-10). The obtained epoxy resin (Ep-10) had an epoxy equivalent weight of 1192 g/eq. The epoxy resin (Ep-10) was confirmed to contain a PTMG-type (BPA) epoxy resin because the mass spectrum showed a peak of M+ = 1492 corresponding to the theoretical structure of m1 = 1, n1 = 11, q = 1, p1 = 0, and p2 = 0 in the following formula.

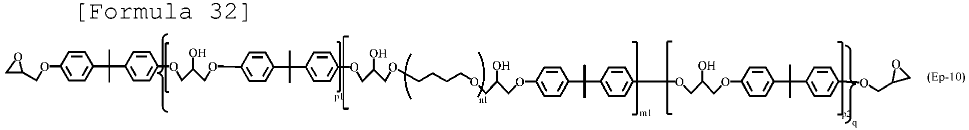

### Preparation of Composition and Cured Article

A curable resin composition was obtained by uniformly mixing each compound with a mixer ("Awatori Neritaro ARV-200" from THINKY CORPORATION) in accordance with the formulation in Tables (the numbers in the tables are based on mass). The curable resin composition was sandwiched between aluminum mirror-finished plates ("JIS H 4000 A1050P" from Engineering Test Service Co., Ltd.) with a silicon tube as a spacer, and heated and cured under predetermined conditions to obtain a cured article with a thickness of 0.7 mm.

### <Tensile Elongation>

The obtained cured article was cut out into a dumbbell shape (JIS K 7161-2-1BA) with a die cutter, and this was used as a specimen. Tensile testing of the specimen was conducted using a tensile tester ("Autograph AG-IS" from Shimadzu Corporation) in accordance with JIS K 7162-2 to determine the elongation at break (test speed: 2 mm/min) at 23°C in a measurement environment.

### <Remolding Test>

The prepared cured article was frozen and crushed. 0.07 g of the crushed cured article was placed in a 10 mm square, 0.5 mm thick mold and vacuum-pressed under predetermined conditions. The appearance of the obtained cured article was visually observed. The criteria are as follows.
A: Seams disappeared and the cured article became integrated.
B: Seams were partially visible, but the cured article became integrated.
C: Had solid shape and fell apart when light force was applied.

### <Repair Test>

The prepared cured article was cut with a razor blade, and the resulting fracture surfaces were brought into contact with each other and then aged in a dryer at 150°C for 24 hours. After removal from the dryer, the fracture surfaces of the cured article were visually checked for joining. The criteria are as follows.
A: Joined, and bending the cured article 90° does not cause the joined section to dissociate.
B: Joined, and bending the cured article causes the joined section to dissociate.
C: Not joined.

**[Table 1]**

| | | Ex. 13 | Ex. 14 | Ex. 15 | Ex. 16 | Comp. Ex. 4 |
|---|---|---|---|---|---|---|
| Epoxy resin | EPICLON 850S | 66.4 | 32.9 | 32.9 | 32.9 | 32.9 |
| Hydroxyl groupcontaining compound | Compound synthesized in Ex. 2 (Ph-1) | 30.8 | | | | |
| | Compound synthesized in Ex. 7 (Ph-2) | | 57.8 | | | |
| | Compound synthesized in Ex. 10 (Ph-3) | | | 57.3 | | |
| | Compound synthesized in Ex. 11 (Ph-4) | | | | 58.5 | |
| | Compound synthesized in Syn. Ex. 2 (Ph-5) | | | | | 67.1 |
| Maleimide compound | BMI-TMH | 2.8 | 9.3 | 9.8 | 8.6 | |
| Curing agent | DICY | 7.4 | 3.7 | 3.7 | 3.7 | 3.7 |
| Curing accelerator | DCMU | 0.85 | 0.85 | 0.85 | 0.85 | 0.85 |
| Diels-Alder addition structure concentration | unit: mmol/g | 0.16 | 0.59 | 0.63 | 0.55 | 0.00 |
| Curing condition | temperature/time | 150°C/1 hr + 180°C/3 hr | | | | |
| Remolding test | Vacuum press condition temperature/time/pressure | 180°C/20 min/20 MPa | | | | |
| | Assessment | A | A | A | A | C |
| Repair test | Aging condition temperature/time | 150°C/24 hr | | | | |
| | Assessment | A | A | A | A | C |

**[Table 2]**

| | | Ex. 17 | Ex. 18 | Ex. 19 | Ex. 20 | Comp. Ex. 5 |
|---|---|---|---|---|---|---|
| Epoxy resin | EPICLON 850S | 32.9 | 32.9 | 32.9 | 32.9 | 64.4 |
| Hydroxyl group-containing compound | Compound synthesized in Ex. 2 (Ph-1) | 61.6 | | | | |
| | Compound synthesized in Ex. 7 (Ph-2) | | 57.8 | | | |
| | Compound synthesized in Ex. 10 (Ph-3) | | | 57.3 | | |
| | Compound synthesized in Ex. 11 (Ph-4) | | | | 58.5 | |
| | Compound synthesized in Syn. Ex. 2 (Ph-5) | | | | | |
| Maleimide compound | BMI-TMH | 5.5 | 9.3 | 9.8 | 8.6 | |
| Curing agent | TD-2131 | 18.2 | 18.2 | 18.2 | 18.2 | 35.6 |
| Curing accelerator | TPP | 1.2 | 1.2 | 1.2 | 1.2 | 1.0 |
| Diels-Alder addition structure concentration | unit: mmol/g | 0.29 | 0.49 | 0.52 | 0.46 | 0.00 |
| Curing condition | temperature/time | 150°C/1 hr + 180°C/3 hr | | | | |
| Remolding test | Vacuum press condition temperature/time/pressure | 180°C/20 min/20 MPa | | | | |
| | Assessment | A | A | A | A | C |
| Repair test | Aging condition temperature/time | 150°C/24 hr | | | | |
| | Assessment | A | A | A | A | C |

**[Table 3]**

| | | Ex. 21 | Ex. 22 | Ex. 23 | Ex. 24 | Comp. Ex. 6 |
|---|---|---|---|---|---|---|
| Epoxy resin | EPICLON 850S | 32.9 | 32.9 | 32.9 | 32.9 | 32.9 |
| Hydroxyl group-containing compound | Compound synthesized in Ex. 2 (Ph-1) | 61.6 | | | | |
| | Compound synthesized in Ex. 7 (Ph-2) | | 57.8 | | | |
| | Compound synthesized in Ex. 10 (Ph-3) | | | 57.3 | | |
| | Compound synthesized in Ex. 11 (Ph-4) | | | | 58.5 | |
| | Compound synthesized in Syn. Ex. 2 (Ph-5) | | | | | 67.1 |
| Maleimide compound | BMI-TMH | 5.5 | 9.3 | 9.8 | 8.6 | |
| Curing agent | 4,4'-Diaminodiphenyl sulfone | 10.9 | 10.9 | 10.9 | 10.9 | 10.9 |
| Diels-Alder addition structure concentration | unit: mmol/g | 0.32 | 0.56 | 0.59 | 0.51 | 0.00 |
| Curing condition | temperature/time | 150°C/1 hr + 180°C/3 hr | | | | |
| Remolding test | Vacuum press condition temperature/time/pressure | 180°C/20 min/20 MPa | | | | |
| | Assessment | A | A | A | A | C |
| Repair test | Aging condition temperature/time | 150°C/24 hr | | | | |
| | Assessment | A | A | A | A | C |

**[Table 4]**

| | | Ex. 25 | Ex. 26 | Ex. 27 | **Ex.** 28 | Ex. 29 | Ex. 30 |
|---|---|---|---|---|---|---|---|
| Epoxy resin | EPICLON 850S | 32.9 | | 32.9 | 32.9 | 32.9 | 32.9 |
| | Compound synthesized in Ex. 1 (Ep-1) | 60.0 | | | | | |
| | Compound synthesized in Ex. 3 (Ep-2) | | 79.6 | | | | |
| | Compound synthesized in Ex. 4 (Ep-3) | | | 57.4 | | | |
| | Compound synthesized in Ex. 5 (Ep-4) | | | | 57.8 | | |
| | Compound synthesized in Ex. 6 (Ep-5) | | | | | 61.4 | |
| | Compound synthesized in Ex. 8 (Ep-6) | | | | | | 60.9 |
| | Compound synthesized in Ex. 9 (Ep-7) | | | | | | |
| | Compound synthesized in Ex. 12 (Ep-9) | | | | | | |
| | Compound synthesized in Syn. Ex. 3 (Ep-10) | | | | | | |
| Maleimide compound | BMI-TMH | 7.1 | 20.4 | 9.7 | 9.3 | 5.7 | 6.2 |
| Curing agent | DICY | 5.2 | 0.8 | 6.1 | 4.9 | 4.3 | 4.4 |
| Curing accelerator | DCMU | 0.85 | 0.85 | 0.85 | 0.85 | 0.85 | 0.85 |
| Diels-Alder addition structure concentration | unit: mmol/g | 0.44 | 1.27 | 0.60 | 0.59 | 0.35 | 0.39 |
| Curing condition | temperature/time | 150°C/1 hr + 180°C/3 hr | | | | | |
| Remolding test | Vacuum press condition temperature/time/pr essure | 180°C/20 min/20 MPa | | | | | |
| | Assessment | A | A | B | A | A | A |
| Repair test | Aging condition temperature/time | 150°C/24 hr | | | | | |
| | Assessment | A | A | B | A | A | A |

**[Table 5]**

| | | Ex. 31 | Ex. 32 | Comp. Ex. 7 | Comp. Ex. 8 | Comp. Ex. 9 |
|---|---|---|---|---|---|---|
| Epoxy resin | EPICLON 850S | 32.9 | 32.9 | 32.9 | | 100.0 |
| | Compound synthesized in Ex. 1 (Ep-1) | | | | | |
| | Compound synthesized in Ex. 3 (Ep-2) | | | | | |
| | Compound synthesized in Ex. 4 (Ep-3) | | | | | |
| | Compound synthesized in Ex. 5 (Ep-4) | | | | | |
| | Compound synthesized in Ex. 6 (Ep-5) | | | | | |
| | Compound synthesized in Ex. 8 (Ep-6) | | | | | |
| | Compound synthesized in Ex. 9 (Ep-7) | 56.2 | | | | |
| | Compound synthesized in Ex. 12 (Ep-9) | | 58.5 | | | |
| | Compound synthesized in Syn. Ex. 3 (Ep-10) | | | 67.1 | 100.0 | |
| Maleimide compound | BMI-TMH | 10.9 | 8.6 | | | |
| Curing agent | DICY | 4.5 | 7.1 | 5.9 | 2.6 | 11.1 |
| Curing accelerator | DCMU | 0.85 | 0.85 | 0.85 | 0.85 | 0.85 |
| Diels-Alder addition structure concentration | unit: mmol/g | 0.70 | 0.53 | 0.00 | 0.00 | 0.00 |
| Curing condition | temperature/time | 150°C/1 hr + 180°C/3 hr | | | | |
| Remolding test | Vacuum press condition temperature/time/pressure | 180°C/20 min/20 MPa | | | | 150°C/4 hr/10 MPa |
| | Assessment | A | A | C | C | C |
| Repair test | Aging condition temperature/time | 150°C/24 hr | | | | |
| | Assessment | A | A | C | C | C |

**[Table 6]**

| | | Ex. 33 | Ex. 34 | Ex. 35 | Ex. 36 | Ex. 37 | Ex. 38 |
|---|---|---|---|---|---|---|---|
| Epoxy resin | EPICLON 850S | 32.9 | 32.9 | 32.9 | 32.9 | 32.9 | 32.9 |
| | Compound synthesized in Ex. 1 (Ep-1) | 60.0 | | | | | |
| | Compound synthesized in Ex. 3 (Ep-2) | | 53.4 | | | | |
| | Compound synthesized in Ex. 4 (Ep-3) | | | 57.4 | | | |
| | Compound synthesized in Ex. 5 (Ep-4) | | | | 57.8 | | |
| | Compound synthesized in Ex. 6 (Ep-5) | | | | | 61.4 | |
| | Compound synthesized in Ex. 8 (Ep-6) | | | | | | 60.9 |
| | Compound synthesized in Ex. 9 (Ep-7) | | | | | | |
| | Compound synthesized in Ex. 12 (Ep-9) | | | | | | |
| | Compound synthesized in Syn. Ex. 3 (Ep-10) | | | | | | |
| Maleimide compound | BMI-TMH | 7.1 | 13.7 | 9.7 | 9.3 | 5.7 | 6.2 |
| Curing agent | 4,4'-Diaminodiphenyl sulfone | 15.4 | 11.6 | 18.1 | 14.3 | 12.8 | 13.1 |
| Diels-Alder addition structure concentration | unit: mmol/g | 0.41 | 0.84 | 0.55 | 0.54 | 0.33 | 0.36 |
| Curing condition | temperature/time | 150°C/1 hr + 180°C/3 hr | | | | | |
| Remolding test | Vacuum press condition temperature/time/pres sure | 180°C/20 min/20 MPa | | | | | |
| | Assessment | A | A | B | A | A | A |
| Repair test | Aging condition temperature/time | 150°C/24 hr | | | | | |
| | Assessment | A | A | B | A | A | A |

**[Table 7]**

| | | Ex. 39 | Ex. 40 | Comp. Ex. 10 | Comp. Ex. 11 | Comp. Ex. 12 |
|---|---|---|---|---|---|---|
| Epoxy resin | EPICLON 850S | 32.9 | 32.9 | 32.9 | | 100.0 |
| | Compound synthesized in Ex. 1 (Ep-1) | | | | | |
| | Compound synthesized in Ex. 3 (Ep-2) | | | | | |
| | Compound synthesized in Ex. 4 (Ep-3) | | | | | |
| | Compound synthesized in Ex. 5 (Ep-4) | | | | | |
| | Compound synthesized in Ex. 6 (Ep-5) | | | | | |
| | Compound synthesized in Ex. 8 (Ep-6) | | | | | |
| | Compound synthesized in Ex. 9 (Ep-7) | 56.2 | | | | |
| | Compound synthesized in Ex. 12 (Ep-9) | | 58.5 | | | |
| | Compound synthesized in Syn. Ex. 3 (Ep-10) | | | 67.1 | 100.0 | |
| Maleimide compound | BMI-TMH | 10.9 | 8.6 | | | |
| Curing agent | 4,4'-Diaminodiphenyl sulfone | 13.3 | 21.1 | 17.3 | 7.7 | 33.0 |
| Diels-Alder addition structure concentration | unit: mmol/g | 0.66 | 0.47 | 0.00 | 0.00 | 0.00 |
| Curing condition | temperature/time | 150°C/1 hr + 180°C/3 hr | | | | |
| Remolding test | Vacuum press condition temperature/time/pressure | 180°C/20 min/20 MPa | | | | 150°C/4 hr/10 MPa |
| | Assessment | A | A | C | C | C |
| Repair test | Aging condition temperature/time | 150°C/24 hr | | | | |
| | Assessment | A | A | C | C | C |

The components listed in the tables are as follows.
E-850S: bisphenol A liquid epoxy resin (from DIC Corporation, epoxy equivalent 188g/eq)
TD-2131: phenol novolac phenol resin (from DIC Corporation, hydroxyl equivalent 104 g/eq)
BMI-TMH: 1,6'-bismaleimide-(2,2,4-trimethyl)hexane
DICY: dicyandiamide ("DICY7" from Mitsubishi Chemical Corporation)
DCMU: 3-(3,4-dichlorophenyl)-1,1-dimethylurea) ("B-605-IM" from DIC Corporation)
TPP: triphenylphosphine (from Tokyo Chemical Industry Co., Ltd.)

## Claims

1. A curable resin composition comprising:
a curable compound (A) having one or more anthracene structures and two or more curable functional groups (a) in a molecule;
a compound (B) including a dienophilic structure; and
a compound (C) having reactivity with the curable functional groups (a).

2. The curable resin composition according to claim 1,
wherein the curable functional groups (a) are each a hydroxyl group or a glycidyl ether group.

3. The curable resin composition according to claim 1,
wherein the curable compound (A) has an alkylene chain or an alkylene ether chain.

4. The curable resin composition according to claim 1,
wherein the compound including a dienophilic structure is a compound having two or more maleimide groups.

5. The curable resin composition according to claim 2,
wherein the curable functional groups (a) are each a hydroxyl group, and the compound (C) having reactivity with the curable functional groups (a) is an epoxy resin.

6. The curable resin composition according to claim 2,
wherein the curable functional groups (a) are each a glycidyl ether group, and the compound (C) having reactivity with the curable functional groups (a) is a curing agent for epoxy resin.

7. The curable resin composition according to any one of claims 1 to 6, wherein a concentration of reversible bonds by Diels-Alder reaction to a total mass of curable components in the curable resin composition is 0.10 mmol/g or more.

8. A curable resin composition, wherein the curable resin composition according to claim 7 is one or more compositions selected from the group consisting of easy-disassembly compositions, repairable compositions, and compositions for remolding materials.

9. A cured article made by curing the curable resin composition according to claim 7.

10. A laminated pruduct comprising a substrate and a layer including the cured article according to claim 9.

11. A heat-resistant member comprising the cured article according to claim 9.

12. A curable compound represented by any one of the following general formulae (1) to (3): 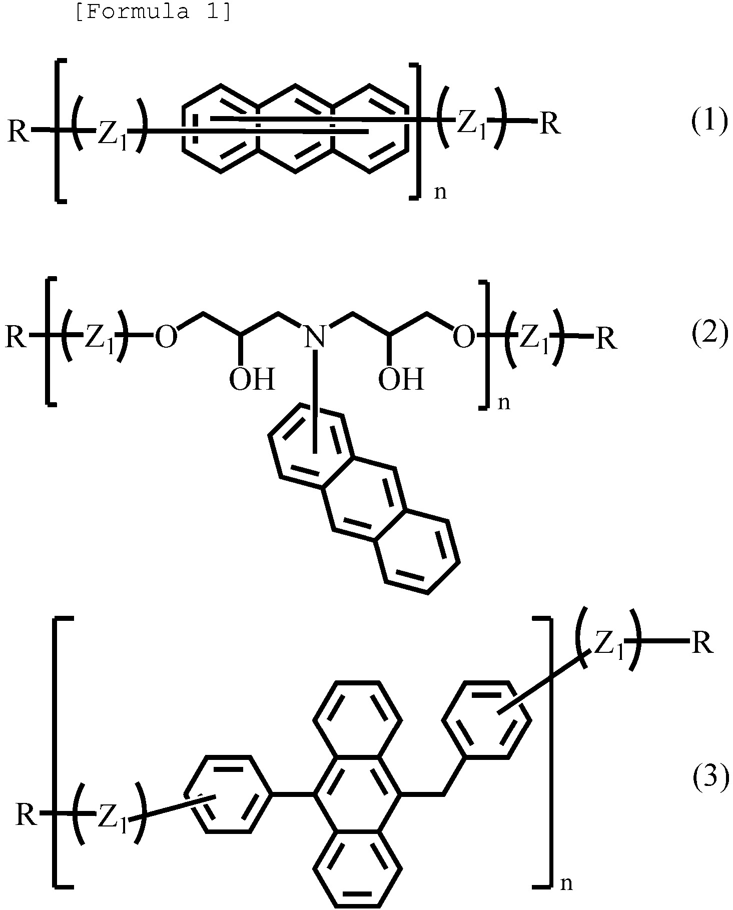
wherein R is a hydroxyl group, a glycidyl ether group, or a 2-methylglycidyl ether group;
Z₁ is any of the following (Z₁-1) to (Z₁-7), 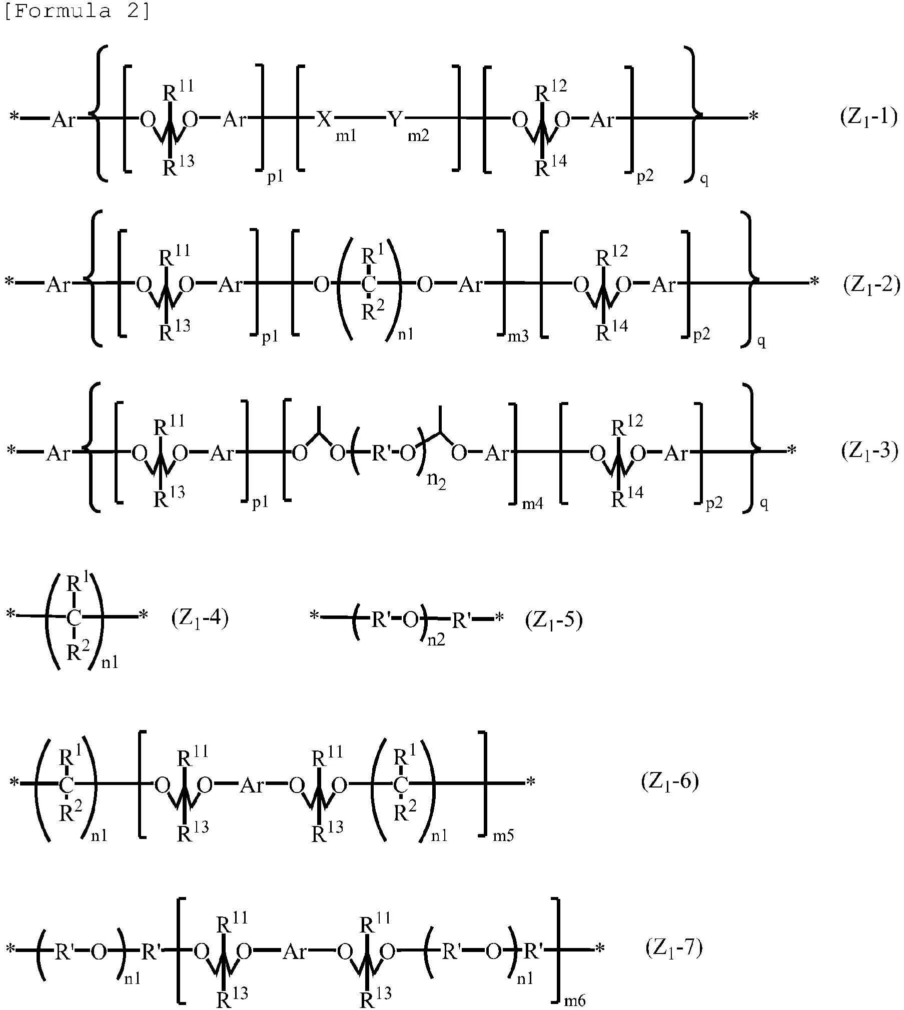
wherein each Ar is independently a structure having an aromatic ring unsubstituted or having a substituent,
R¹¹ and R¹² are each independently a hydroxyl group, a glycidyl ether group, or a 2-methylglycidyl ether group,
R¹³ and R¹⁴ are each a hydrogen atom or a methyl group, R¹ and R² are each independently a hydrogen atom, a methyl group, or an ethyl group,
each R' is independently a divalent hydrocarbon group having 2 to 12 carbon atoms,
n is an average number of repeating units and 0.5 to 10,
n1 is an integer of 4 to 16, and
n2 is an average number of repeating units and 2 to 30, X in formula (Z₁-1) is a structural unit represented by the following general formula (Z₁-1-1) and Y is a structural unit represented by the following general formula (Z₁-1-2), 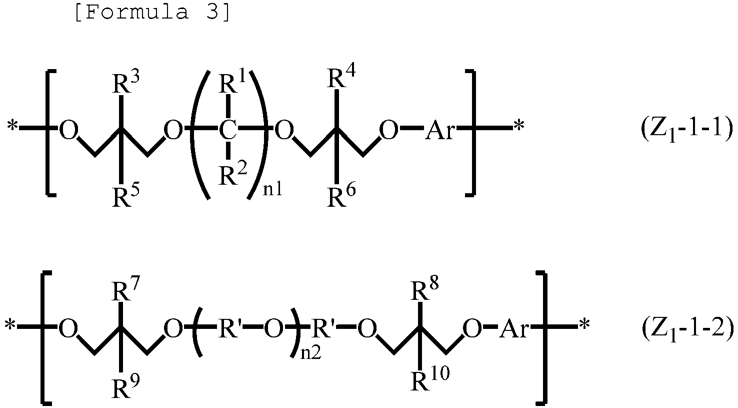
wherein Ar, R¹, R², R', n1, and n2 are as defined above, R³, R⁴, R⁷, and R⁸ are each independently a hydroxyl group, a glycidyl ether group, or a 2-methylglycidyl ether group, and
R⁵, R⁶, R⁹, and R¹⁰ are each independently a hydrogen atom or a methyl group,
m1, m2, m3, m4, m5, m6, p1, p2, and q are each an average number of repetitions,
where m1, m2, m3, m4, m5, and m6 are each independently 0 to 25 and m1 + m2 ≥ 1,
p1 and p2 are each independently 0 to 5, and
q is 0.5 to 5,
provided that bonding between X represented by the general formula (Z₁-1-1) and Y represented by the general formula (Z₁-1-2) is optionally random or block, and total numbers of the structural units X and Y in one molecule are m1 and m2, respectively,
an aromatic ring including an anthracene skeleton in formulae (1) to (3) optionally has a substituent, and a line in the formulae indicates that being connectable at any point on a ring.
